(19) Europäisches Patentamt

European Patent Office

Office européen des brevets

(11) **EP 4 765 040 A1**

(12) **EUROPEAN PATENT APPLICATION**
published in accordance with Art. 153(4) EPC

(43) Date of publication:
24.06.2026 Bulletin 2026/26

(21) Application number: 24893107.3

(22) Date of filing: 21.10.2024

(51) International Patent Classification (IPC):
*G06V 10/774* (2022.01)

(86) International application number:
**PCT/CN2024/125978**

(87) International publication number:
**WO 2025/107948 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 23.11.2023 CN 202311582374

(71) Applicant: Tencent Technology (Shenzhen)
Company Limited
Shenzhen, Guangdong 518057 (CN)

(72) Inventors:
• JIN, Ge
Shenzhen, Guangdong 518057 (CN)
• SHEN, Lei
Shenzhen, Guangdong 518057 (CN)
• ZHANG, Ruixin
Shenzhen, Guangdong 518057 (CN)
• DING, Shouhong
Shenzhen, Guangdong 518057 (CN)

(74) Representative: AWA Sweden AB
Box 5117
200 71 Malmö (SE)

(54) **DETERMINATION METHOD AND APPARATUS FOR ARTIFICIAL PALM PRINT GENERATION MODEL, AND DETERMINATION METHOD AND APPARATUS FOR PALM PRINT RECOGNITION MODEL**

(57) The present application provides a determination method and apparatus for an artificial palm print generation model, and a determination method and apparatus for a palm print recognition model. The determination method for an artificial palm print generation model comprises: acquiring a first training set, wherein the first training set comprises real palm print images and identity control curves of a plurality of users; performing data augmentation on a first real palm print image of a first user in the first training set to obtain a first real palm print image subjected to the data augmentation; obtaining a first artificial palm print image corresponding to the first user and generated by a deep learning model by using the first real palm print image subjected to the data augmentation and a first identity control curve of the first user; when the first artificial palm print image subjected to the data augmentation is the same as the first real palm print image subjected to the data augmentation or when the similarity between the first artificial palm print image subjected to the data augmentation and the first real palm print image subjected to the data augmentation is not greater than a preset similarity threshold, adjusting parameters of the deep learning model; and when the first artificial palm print image subjected to the data augmentation is different from the first real palm print image subjected to the data augmentation or the similarity between the first artificial palm print image subjected to the data augmentation and the first real palm print image subjected to the data augmentation is less than the similarity threshold, determining the deep learning model as an artificial palm print generation model.

30

Acquire a first training set, the first training set including real palm print images and identity control curves of a plurality of users
S31

Perform data augmentation on a first real palm print image of a first user in the first training set to obtain a data-augmented first real palm print image
S32

Obtain a first artificial palm print image corresponding to the first user, generated by a deep learning model using the data-augmented first real palm print image and a first identity control curve of the first user
S33

Adjust parameters of the deep learning model when a data-augmented first artificial palm print image and the data-augmented first real palm print image are identical or have a degree of similarity not greater than a preset similarity threshold
S34

Determine the deep learning model to be an artificial palm print generation model when the data-augmented first artificial palm print image and the data-augmented first real palm print image are different from each other and have a degree of similarity less than the similarity threshold
S35

FIG. 3B

**Description**

RELATED APPLICATION

This application claims priority to Chinese Patent Application No. 202311582374.4, filed with the China National Intellectual Property Administration on November 23, 2023 and entitled "METHOD FOR DETERMINING ARTIFICIAL PALM PRINT GENERATION MODEL, APPARATUS, AND STORAGE MEDIUM THEREOF", which is incorporated herein by reference in its entirety.

FIELD OF THE TECHNOLOGY

This application relates to the technical field of artificial intelligence, and in particular, to a method for determining an artificial palm print generation model, apparatuses, and a method for determining a palm print recognition model.

BACKGROUND OF THE DISCLOSURE

In the field of biometric recognition, palm print recognition technology has gradually emerged as a novel recognition method following fingerprint and facial recognition. Palm print recognition has significant advantages in protecting user privacy. This technology has been widely applied in mobile payment, identity verification, and other aspects, playing an important role in safeguarding users' personal privacy and property security. In the field of palm print recognition, the high privacy of palm prints poses difficulties for large-scale data collection. Therefore, the lack of publicly available palm print datasets has become a crucial factor restricting technological development. Existing publicly available palm print datasets are limited in both quantity and quality. Under small-sample real data conditions, deep learning models are prone to overfitting and instability in training processes.

SUMMARY

In view of this, embodiments of this application provide a method for determining an artificial palm print generation model, an apparatus, and a storage medium thereof.

The embodiments of this application provide a method for determining an artificial palm print generation model, performed by a computer device. The method includes: acquiring a first training set, the first training set including real palm print images and identity control curves of a plurality of users, the real palm print image of a user of the plurality of users corresponding to a unique user identity of the user, and the identity control curve of the user being a parameterized palm print curve indicative of the appearance of the real palm print image; performing data augmentation on a first real palm print image of a first user in the first training set to obtain a data-augmented first real palm print image; obtaining a first artificial palm print image corresponding to the first user generated by applying a deep learning model to the data-augmented first real palm print image and a first identity control curve of the first user; adjusting parameters of the deep learning model when a data-augmented first artificial palm print image is identical to the data-augmented first real palm print image or when a degree of similarity between the data-augmented first artificial palm print image and the data-augmented first real palm print image is not greater than a preset similarity threshold; and determining the deep learning model as the artificial palm print generation model when the data-augmented first artificial palm print image is different from the data-augmented first real palm print image and the degree of similarity between the data-augmented first artificial palm print image and the data-augmented first real palm print image is less than the similarity threshold.

The embodiments of this application also provide a method for determining a palm print recognition model, the method including: acquiring a third training set, the third training set including a real palm print image and an artificial palm print image, each of the real palm print image and the artificial palm print image corresponding to a known user identity, and the artificial palm print image being generated using the artificial palm print generation model according to various embodiments; inputting the real palm print image and the artificial palm print image into the palm print recognition model to obtain a predicted user identity recognized by the palm print recognition model; adjusting parameters of the palm print recognition model when a degree of similarity between the known user identity and the predicted user identity is not greater than a preset similarity threshold; and providing the palm print recognition model for recognizing a user identity corresponding to the palm print images when the degree of similarity between the known user identity and the predicted user identity is greater than the similarity threshold.

The embodiments of this application also provide a determination apparatus for an artificial palm print generation model, including: an acquiring module, configured to acquire a first training set, the first training set including real palm print images and identity control curves of a plurality of users, the real palm print image of a user of the plurality of users corresponding to a unique user identity of the user, and the identity control curve of the user being a parameterized palm print curve indicative of the appearance of the real palm print image; an iteration module, configured to perform data augmentation on a first real palm print image of a first user in the first training set to obtain a data-augmented first real palm print image; obtain a first artificial palm print image corresponding to the first user generated by applying a deep learning model to the data-augmented first real palm print image and a first identity control curve of the first user; adjust parameters of the deep learning model when a data-augmented first artificial palm print image is identical to the data-augmented first real palm print image or when a degree of similarity between the data-augmented first artificial palm print image and the data-augmented first real palm print image is not greater than a preset similarity threshold; and determine the deep learning model as the artificial palm print generation model when the data-augmented first artificial palm print image is different from the data-augmented first real palm print image and the degree of similarity between the data-augmented first artificial palm print image and the data-augmented first real palm print image is less than the similarity threshold.

The embodiments of this application further provide a determination apparatus for a palm print recognition model, including: an acquiring module, configured to acquire a third training set, the third training set including a real palm print image and an artificial palm print image, each of the real palm print image and the artificial palm print image corresponding to a known user identity, and the artificial palm print image being generated by the artificial palm print generation model according to various embodiments; an update module, configured to input the real palm print image and the artificial palm print image into the palm print recognition model to obtain a predicted user identity recognized by the palm print recognition model; adjust parameters of the palm print recognition model when a degree of similarity between the known user identity and the predicted user identity is not greater than a preset similarity threshold; and provide the palm print recognition model for recognizing a user identity corresponding to the palm print images when the degree of similarity between the known user identity and the predicted user identity is greater than the similarity threshold.

The embodiments of this application also provide a computing device, including: a memory and a processor, the memory having a computer program stored therein, the computer program, when executed by the processor, causing the processor to implement the method for determining an artificial palm print generation model and/or the method for determining a palm print recognition model according to the embodiments of this application.

The embodiments of this application also provide a computer-readable storage medium, having computer-executable instructions stored therein, the computer-executable instructions, when executed, implementing the method for determining an artificial palm print generation model and/or the method for determining a palm print recognition model according to the embodiments of this application.

The embodiments of this application provide a computer program product, including a computer program, the computer program, when executed by a processor, implementing the method for determining an artificial palm print generation model and/or the method for determining a palm print recognition model of the embodiments of this application.

This application provides a method for determining an artificial palm print generation model, an apparatus, and a storage medium thereof. The method effectively enhances the training stability and palm print synthesis quality under small-sample scenarios by performing data augmentation on real palm prints and artificial palm prints, thereby improving the performance of the artificial palm print generation model. By generating palm print images with high accuracy and controllable user identities, the method provides a large amount of labeled data for deep learning model training, thereby meeting the demand for large-scale datasets in deep learning-based palm print recognition technology. This significantly enhances the performance of the model and reduces the dependence of palm print recognition tasks on real samples. Thus, the method solves the technical problem that, under limitations in the quantity and quality of publicly available palm print datasets, the artificial palm print generation model is prone to overfitting and instability in training processes.

With reference to the embodiments described hereinafter, these and other aspects of this application will become clear and apparent, and will be elucidated in conjunction with the embodiments described hereinafter.

BRIEF DESCRIPTION OF THE DRAWINGS

In the following description of exemplary embodiments in conjunction with the accompanying drawings, further details, features, and advantages of this application are disclosed, where in the drawings:

FIG. 1 shows a schematic diagram of an exemplary implementation environment according to an embodiment of this application.

FIG. 2 shows a flowchart of palm print recognition in an exemplary mobile payment scenario according to an embodiment of this application.

FIG. 3A is a schematic diagram of a flow of palm print recognition according to an embodiment of this application.

FIG. 3B shows a flowchart of a method for determining an artificial palm print generation model according to an embodiment of this application.

FIG. 3C shows a flowchart of a method for determining an artificial palm print generation model according to an embodiment of this application.

FIG. 3D shows a method for determining a palm print recognition model according to an embodiment of this application.

FIG. 3E shows a schematic diagram of a determination apparatus for an artificial palm print generation model according to an embodiment of this application.

FIG. 3F shows a schematic diagram of a determination apparatus for a palm print recognition model according to an embodiment of this application.

FIG. 4 is a schematic diagram of a training system of an artificial palm print generation model according to an embodiment of this application.

FIG. 5A and FIG. 5B are schematic diagrams of the effect of data augmentation in a scenario where a discriminator is overfitting according to the embodiment of this application.

FIG. 6A and FIG. 6B are schematic diagrams of a palm print template according to an embodiment of this application.

FIG. 7 is a schematic diagram of quality comparison of artificial palm print images according to an embodiment of this application.

FIG. 8 is a flowchart of a method for determining an artificial palm print generation model according to an embodiment of this application.

FIG. 9 is a flowchart of a method for determining a palm print recognition model according to an embodiment of this application.

FIG. 10 is a schematic block diagram of a determination apparatus for an artificial palm print generation model according to an embodiment of this application.

FIG. 11 shows a schematic block diagram of a determination apparatus for a palm print recognition model.

FIG. 12 is an example block diagram of a computing device according to an embodiment of this application.

DESCRIPTION OF EMBODIMENTS

The technical solutions in this application will be clearly and completely described below in conjunction with the accompanying drawings in this application. The described embodiments are merely part of the embodiments of this application, rather than all embodiments. Based on the embodiments of this application, all other embodiments obtained by a person skilled in the art without inventive effort fall within the protection scope of this application.

Region of interest (ROI) refers to a specific region in an image or video that is of significant importance to a task or focus. When performing tasks such as image processing and object detection, it is usually necessary to process and analyze only the ROI to improve computational efficiency and accuracy. The ROI may be obtained either by manual selection and labeling in an image or video, or by automatic detection. The definition and selection of the ROI vary with different tasks and applications. In image processing, the ROI may be a local region of the image to be augmented, restored, or transformed. In object detection, the ROI is typically a target object to be detected. By limiting the processing scope, efforts and computational resources may be focused on the most relevant regions, thereby improving the efficiency and performance of the algorithm.

Generative adversarial network (GAN) is a generation model that learns through adversarial interaction between two neural networks. The GAN includes a generator and a discriminator. The generator takes random samples from a latent space as input, and its output needs to mimic real samples in a training set as closely as possible. The discriminator takes as input either the real samples or the generator's output, with a purpose of distinguishing the generator's output from the real samples as accurately as possible. The generator and the discriminator engage in adversarial interaction and continuously learn, with an ultimate goal of making the discriminator unable to determine whether the generator's output is real.

Palm print recognition technology demands extremely high recognition accuracy in mobile payment scenarios, where it directly involves users' wealth. Conventional palm print recognition methods measure the similarity between different user identities through feature extraction. Deep learning-based palm print recognition technology, which has become a more common technical solution in recent years, extracts features from palm print data by designing efficient network structures and constraining loss functions, and then implements identity recognition verification using similarity matching algorithms. In the deep learning-based palm print recognition technology, methods based on adversarial neural networks are capable of generating artificial palm print images with high accuracy and controllable user identities, thereby meeting the demand for large-scale datasets in the deep learning-based palm print recognition technology.

Deep learning algorithm models rely on large-scale labeled data for training to extract effective features and achieve effects close to real palm prints. For example, palm print data synthesis techniques may include GANs and diffusion models, both of which may achieve good synthesis effects on large-scale and diverse training data. However, due to privacy considerations related to palm print data, existing publicly available palm print datasets are subject to limitations in both quantity and quality.

Existing palm print synthesis model may effectively generate a large amount of palm print information with the same valid user identity (also known as user identity-constrained palm print) when there are sufficient training samples, thereby expanding the training dataset for palm print recognition. However, due to the limitations in the quantity and quality of the publicly available palm print datasets, existing deep learning models for palm print recognition are prone to discriminator overfitting, loss of user identity information, and instability in training processes under small-sample real data conditions. Due to the particularity of palm print data, existing small-sample generation models cannot be optimized for palm print synthesis scenarios, failing to meet current demands. In small-sample scenarios (i.e., where real data is limited), data augmentation and transfer learning models may mitigate the demand for real data. The advent of synthetic data provides a large amount of labeled data for training deep learning models for palm print recognition, thereby significantly enhancing the performance of palm print recognition models.

In the embodiments of this application, a degree of overfitting of the model is effectively measured by an image quality comparison module and statistical data from the training process, and the training stability and image synthesis quality of the model under small-sample scenarios are effectively augmented through dynamic data augmentation and regularization methods.

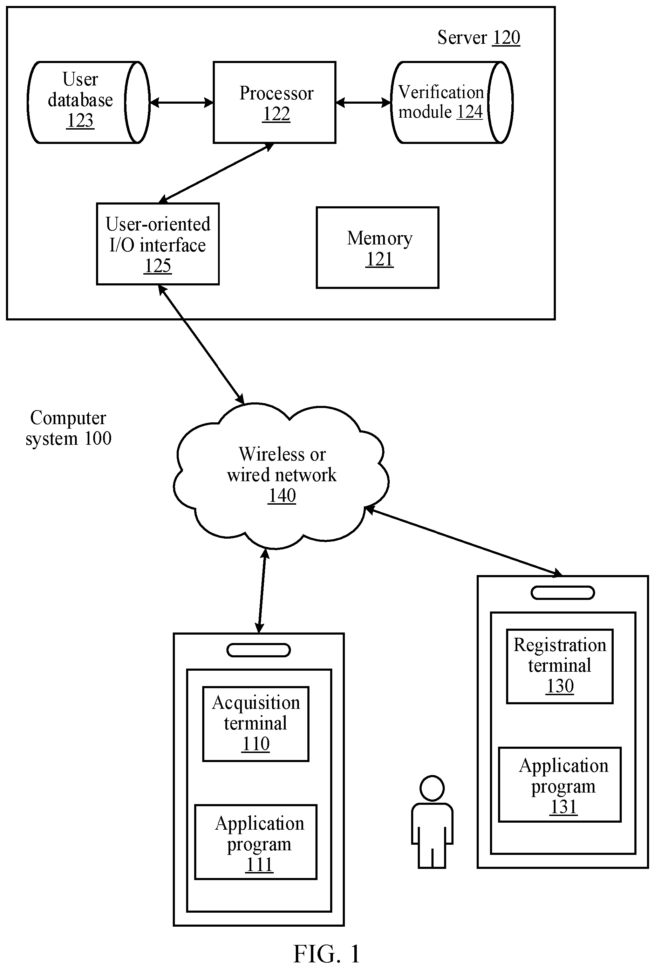

FIG. 1 shows a schematic diagram of an exemplary computer system 100 according to an embodiment of this application. This implementation environment may include: an acquisition terminal 110, a server 120, and a registration terminal 130.

The acquisition terminal 110 has an application program 111 installed and running. When the acquisition terminal 110 runs the application program 111, the acquisition terminal 110 activates a camera to capture palm print images of a user in real time, and transmits the palm print images to the server 120 for payment verification. Upon receiving a payment result from the server 120, the payment result is displayed to inform the user whether the payment was successful. The application program 111 may be an application program such as a shopping application program, a payment application program, and a financial transaction application program.

The registration terminal 130 has an application program 131 installed and running. In some embodiments, the application programs installed on the acquisition terminal 110 and the registration terminal 130 are identical. In some embodiments, the application programs installed on the two terminals are the same type of application program on different operating system platforms (Android or iPhone operating system (IOS)). In some embodiments, the application programs installed on the two terminals are different versions of the same type of application program (e.g., an application program supporting payments and an application program supporting collections). When the registration terminal 130 receives an account registration operation, the registration terminal 130 activates the camera to capture the palm print images of the user 132, and transmits captured images and a registration account to the server 120, thereby enabling the server 120 to update a user database 123. The user database 123 has user accounts and their corresponding palm print features stored therein.

Although only one payment terminal and one account registration terminal are shown in FIG. 1, there are a plurality of other terminals that may access the server 120 in different embodiments. In some embodiments, there is also one or more terminals corresponding to developers. The terminals have development and editing platforms for the application programs installed. The developers may edit and update the application programs on the terminals, and transmit updated application installation packages to the server 120 through a wireless or wired network 140. The acquisition terminal 110 and the registration terminal 130 may download the application installation packages from the server 120 to implement the update of the application programs.

The acquisition terminal 110, the registration terminal 130, and other terminals are connected to the server 120 through the wireless or wired network.

The server 120 includes at least one of a single server, a server cluster composed of a plurality of servers, a cloud computing platform, and a virtualization center. In some embodiments, the server 120 includes a memory 121, a processor 122, a user database 123, a verification module 124, a user-oriented input/output interface (I/O interface) 125. The processor 122 is configured to load instructions stored in the server 120 and to process data in the user database 123 and the verification module 124. The user database 123 is configured to store data of user accounts used by the registration terminal 130 and other terminals, and the data includes the user accounts and corresponding palm print features. The verification module 124 is configured to, when obtaining palm print features and determining that payment verification is required for a target account, perform the payment for the target account. The user-oriented I/O interface 125 is configured to establish communication and exchange data with the acquisition terminal 110 and/or the registration terminal 130 through the wireless or wired network.

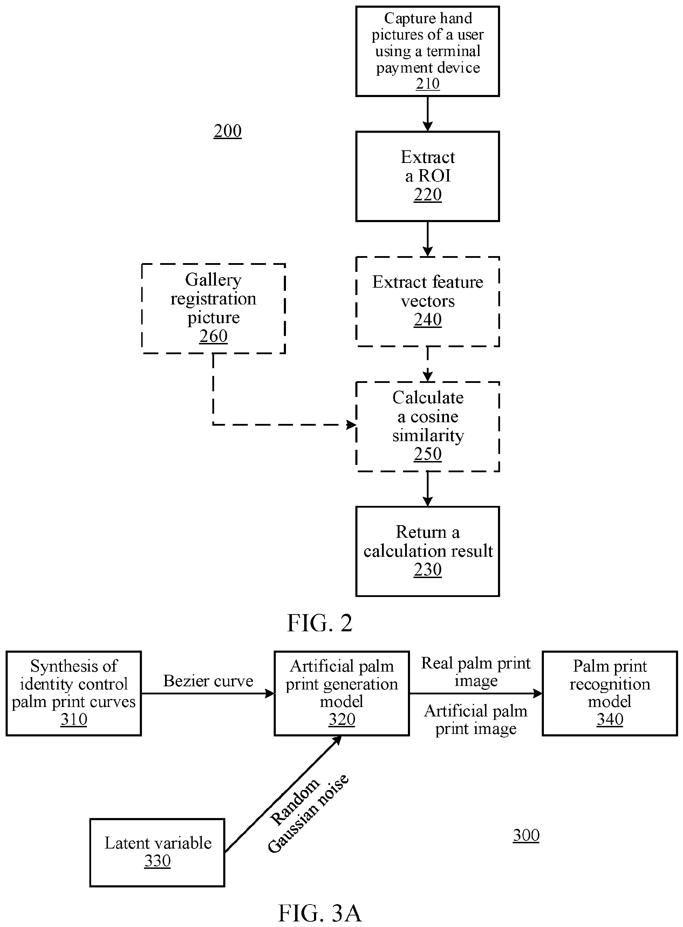

FIG. 2 shows a flowchart 200 of palm print recognition in an exemplary mobile payment scenario according to an embodiment of this application. As understood by a person skilled in the art, the mobile payment scenario herein is merely an example, and the application scope of the palm print recognition method is not limited to this scenario. Operation 210: Capture hand pictures of a user using a terminal payment device. Operation 220: Extract a ROI from the hand pictures. Operation 230: Input the ROI into a palm print recognition model to obtain an identity recognition result. Thus, a user identity corresponding to the palm print images is recognized using the palm print recognition model. In some embodiments, operations may be as shown in the dashed box of FIG. 2. Operation 240: Extract feature vectors of a palm corresponding to the user identity. Operation 250: Calculate a similarity between the feature vectors of the palm and gallery features. The similarity may be a cosine similarity. Identity information corresponding to a gallery picture with the highest similarity is taken as a recognition result in operation 260.

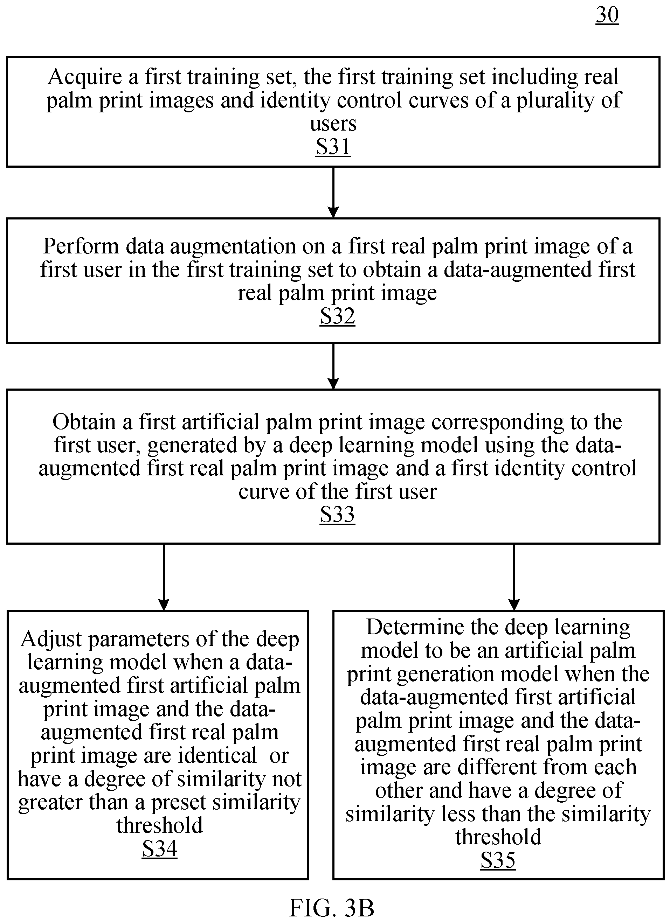

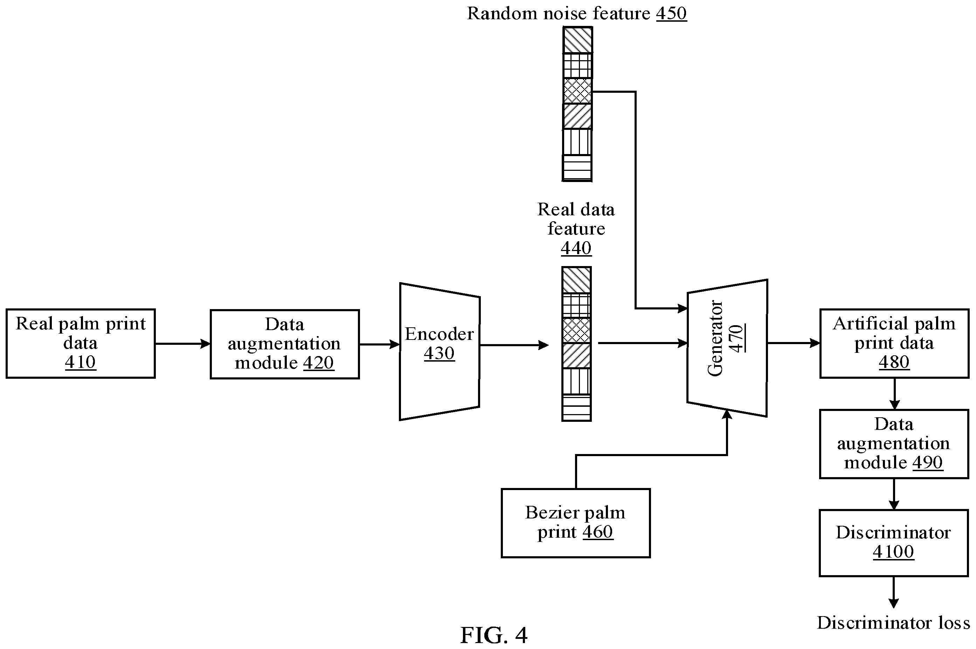

FIG. 3A shows a schematic diagram of a flow 300 of palm print recognition according to an embodiment of this application. In this flow, artificial palm print images are generated using an artificial palm print generation model 320. Screened artificial palm print images are used as pseudo-positive samples and input into a palm print recognition model 340. In some embodiments, the artificial palm print generation model 320 includes a structure of a deep learning model 400. For a detailed description of the deep learning model 400, refer to FIG. 4. In block 310, synthesis of identity control palm print curves (hereinafter referred to as identity control curves) is performed. The generated Bezier curve serves as an input to the artificial palm print generation model 320, imposing identity constraints on the artificial palm print generation model 320 to enable it to generate identity-controllable artificial palm prints. In block 330, a latent variable is input to the artificial palm print generation model 320, enabling the trained artificial palm print generation model to generate more robust artificial palm print images. In some embodiments, the latent variable 330 may be random Gaussian noise. When training the palm print recognition model 340, real palm print images and a portion of the artificial palm print images selected from the above artificial palm print images according to predetermined conditions are input into the palm print recognition model 340 for palm print recognition. Methods for determining the artificial palm print generation model 320 and the palm print recognition model 340 are specifically described with reference to FIG. 3B, FIG. 3C, FIG. 3D, FIG. 8, and FIG. 9.

In the embodiments of this application, the artificial palm print generation model 320 has been optimized for small-sample training data scenarios, incorporating a data augmentation expansion component into the artificial palm print generation model 320. Furthermore, in some embodiments, based on statistical data from a training process and an image quality comparison module, an overfitting issue in the GAN has been effectively addressed.

FIG. 3B shows a flowchart of a method for determining an artificial palm print generation model according to an embodiment of this application. As shown in FIG. 3B, the method 30 may include the following operations.

Operation S31: Acquire a first training set, the first training set including real palm print images and identity control curves of a plurality of users. The real palm print image of each of the plurality of users corresponds to a unique user identity of the user, and the identity control curve of the user is a parameterized palm print curve which is generated in advance for the unique user identity of the user and is indicative of the appearance of a palm print.

Operation S32: Perform data augmentation on a first real palm print image of a first user in the first training set to obtain a data-augmented first real palm print image.

Operation S33: Obtain a first artificial palm print image corresponding to the first user, generated by a deep learning model using the data-augmented first real palm print image and a first identity control curve of the first user.

Operation S34: Adjust, when a data-augmented first artificial palm print image is identical to the data-augmented first real palm print image or when a degree of similarity between the data-augmented first artificial palm print image and the data-augmented first real palm print image is not greater than a preset similarity threshold, parameters of the deep learning model.

Operation S35: Determine, when the data-augmented first artificial palm print image is different from the data-augmented first real palm print image and the degree of similarity between the data-augmented first artificial palm print image and the data-augmented first real palm print image is less than the similarity threshold, the deep learning model as the artificial palm print generation model.

In the embodiments, the above operations S32 to S34 may be repeatedly executed, that is, iterative training of the deep learning model may be performed. Each iteration may use different training data from the first training set, namely, {real palm print image, identity control curve} data pairs. After each generation of artificial palm print images, the parameters of the deep learning model are adjusted based on the similarity between the real palm print image and the artificial palm print image after data augmentation. This repetitive iterative and adjustment process, i.e., the training process, enables the deep learning model to generate the desired artificial palm print images, namely, images that meet conditions of operation S35, indicating the completion of training.

In some embodiments, the data augmentation includes at least one of geometric transformation, color transformation, and filtering transformation.

In some embodiments, the data augmentation includes data augmentation based on an augmentation probability. The augmentation probability is determined based on the following parameter: a degree of overfitting between a data-augmented second real palm print image previously input to the deep learning model and a data-augmented second artificial palm print image previously output by the deep learning model.

In some embodiments, the augmentation probability is determined according to the following operations: Adjust the augmentation probability by a preset amplitude value based on the degree of overfitting between the data-augmented second artificial palm print image and the data-augmented second real palm print image, and ensure that the adjusted augmentation probability falls within a preset first range (also referred to as interval range). When the augmentation probability is adjusted for the first time, a value of the augmentation probability is a preset initial value.

In some embodiments, operation S33 may include:

inputting random Gaussian noise into the deep learning model to obtain the first artificial palm print image generated by the deep learning model using the random Gaussian noise to change image features of the first real palm print image.

In some embodiments, the identity control curve is a parameterized palm print curve which is generated using a palm print template and is indicative of the appearance of a palm print, and the palm print template includes a first number of first palm print sub-curves and a second number of second palm print sub-curves parameterized using Bezier curves. At this time, operation S33 may include: obtaining the first artificial palm print image generated by the deep learning model using the first number of first palm print sub-curves and the second number of second palm print sub-curves in the identity control curves, palm print lines in the first artificial palm print image corresponding one-to-one with palm print sub-curves in the first palm print sub-curves and the second palm print sub-curves.

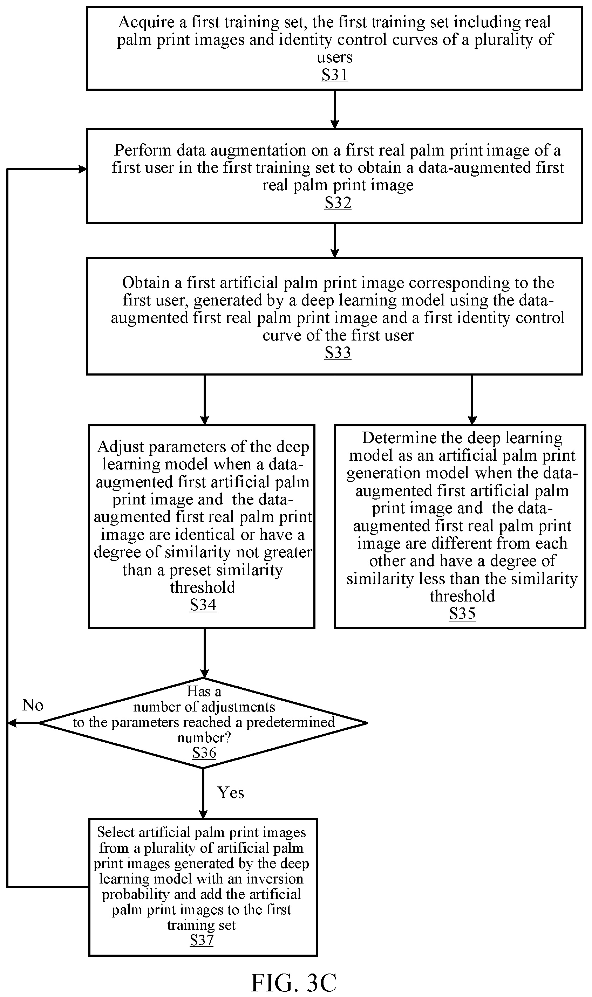

FIG. 3C shows a flowchart of a method for determining an artificial palm print generation model according to an embodiment of this application. As shown in FIG. 3C, the method 30 shown in FIG. 3B may further include the following operations.

Operation S36: Determine whether a number of adjustments to the parameters of the deep learning model has reached a predetermined number.

If the number of adjustments has not reached the predetermined number, operation S32 is executed to obtain data pairs of another user from the first training set for the next training iteration of the deep learning model.

Operation S37: Select, after the number of adjustments to the parameters of the deep learning model reaches the predetermined number of times, artificial palm print images from a plurality of artificial palm print images generated by the deep learning model with an inversion probability and add the artificial palm print images to the first training set for training the deep learning model. The inversion probability is determined based on the following parameter: a degree of overfitting between a data-augmented third real palm print image previously input to the deep learning model and a data-augmented third artificial palm print image previously output by the deep learning model, and the inversion probability falls within a second interval range.

In some embodiments, the adding artificial palm print images selected from the plurality of artificial palm print images generated by the deep learning model with an inversion probability to the first training set includes:

performing quality comparison between images in a first set of artificial palm print images output by the deep learning model and images in a second set of artificial palm print images, the second set of artificial palm print images being generated before the first set of artificial palm print images, and the deep learning model generating a predetermined number of artificial palm print images after the second set of artificial palm print images being generated and before the first set of artificial palm print images being generated; and

adding, in response to the images in the first set of artificial palm print images having higher quality than the images in the second set of artificial palm print images, the images selected from the first set of artificial palm print images with the inversion probability to the first training set for training the deep learning model.

In some embodiments, the performing quality comparison between images in a first set of artificial palm print images output by the deep learning model and images in a second set of artificial palm print images includes:

acquiring a second training set, the second training set including a plurality of image pairs and corresponding quality comparison labels of the plurality of image pairs, the image pair including a first image and a second image, and the quality comparison label indicating a quality comparison result of the first image and the second image;

extracting a first feature vector of the first image and a second feature vector of the second image;

splicing the first feature vector and the second feature vector to obtain a spliced feature vector;

inputting the spliced feature vector into a first neural network to obtain a predicted quality comparison result between the first image and the second image;

adjusting, when a difference between the predicted quality comparison result and the quality comparison result indicated by the quality comparison label does not meet a preset minimization condition, or when distributions of the first feature vector and the second feature vector do not conform to a normal distribution, parameters of the first neural network model;

determining, when the difference between the predicted quality comparison result and the quality comparison result indicated by the quality comparison label meets the preset minimization condition and the distributions of the first feature vector and the second feature vector follow a normal distribution, the first neural network model as a trained first neural network model; and

splicing the feature vectors of the images in the first set of artificial palm print images output by the deep learning model and the images in the second set of artificial palm print images, and inputting the spliced feature vectors into the trained first neural network model to obtain a quality comparison result.

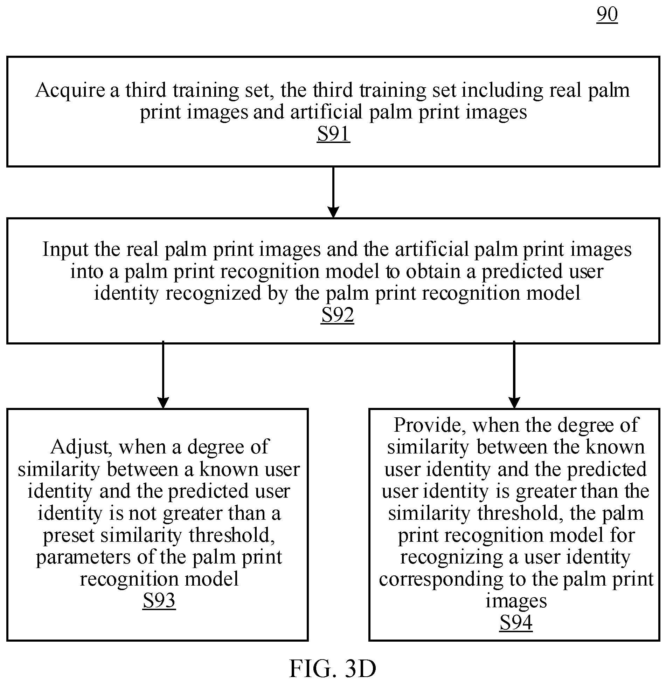

FIG. 3D shows a method for determining a palm print recognition model according to an embodiment of this application. As shown in FIG. 3D, the method 90 may include the following operations.

Operation S91: Acquire a third training set, the third training set including real palm print images and artificial palm print images. Each of the real palm print images and the artificial palm print images corresponds to a known user identity. The artificial palm print images are generated by the artificial palm print generation model determined by the method according to any embodiment of this application.

Operation S92: Input the real palm print images and the artificial palm print images into the palm print recognition model to obtain a predicted user identity recognized by the palm print recognition model.

Operation S93: Adjust, when a degree of similarity between the known user identity and the predicted user identity is not greater than a preset similarity threshold, parameters of the palm print recognition model.

Operation S94: Provide, when the degree of similarity between the known user identity and the predicted user identity is greater than the similarity threshold, the palm print recognition model for recognizing a user identity corresponding to the palm print images.

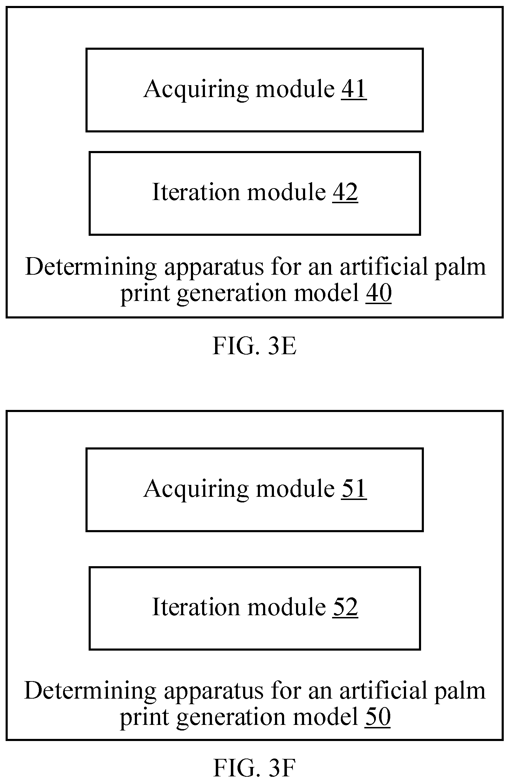

Accordingly, the embodiments of this application also provide a determining apparatus for an artificial palm print generation model. FIG. 3E shows a schematic diagram of a determination apparatus 40 for an artificial palm print generation model according to an embodiment of this application. As shown in FIG. 3E, the determination apparatus 40 for an artificial palm print generation model includes the following modules.

An acquiring module 41 may acquire a first training set. The first training set includes real palm print images and identity control curves of a plurality of users. The real palm print image of each of the plurality of users corresponds to a unique user identity of the user, and the identity control curve of the user is a parameterized palm print curve which is generated in advance for the unique user identity of the user and is indicative of the appearance of a palm print.

An iteration module 42 may input a first real palm print image of a first user and a first identity control curve of the first user in the first training set into a deep learning model to obtain a first artificial palm print image corresponding to the first user, generated by the deep learning model using the first identity control curve and a data-augmented first real palm print image. When a data-augmented first artificial palm print image is identical to the data-augmented first real palm print image or when a degree of similarity between the data-augmented first artificial palm print image and the data-augmented first real palm print image is not greater than a preset similarity threshold, parameters of the deep learning model are adjusted. When the data-augmented first artificial palm print image is different from the data-augmented first real palm print image and the degree of similarity between the data-augmented first artificial palm print image and the data-augmented first real palm print image is less than the similarity threshold, the deep learning model is determined as the artificial palm print generation model.

The embodiments of this application also provide a determination apparatus for a palm print recognition model. FIG. 3F shows a schematic diagram of a determination apparatus 50 for a palm print recognition model according to an embodiment of this application. As shown in FIG. 3F, the determination apparatus 50 for a palm print recognition model includes the following modules.

An acquiring module 51 may acquire a third training set. The third training set includes real palm print images and artificial palm print images. Each of the real palm print images and the artificial palm print images corresponds to a known user identity, and the artificial palm print images are generated using the artificial palm print generation model determined by any embodiment of this application.

An update module 52 may input the real palm print images and the artificial palm print images into the palm print recognition model to obtain a predicted user identity recognized by the palm print recognition model. When a degree of similarity between the known user identity and the predicted user identity is not greater than a preset similarity threshold, parameters of the palm print recognition model are adjusted. When the degree of similarity between the known user identity and the predicted user identity is greater than the similarity threshold, the palm print recognition model is provided for recognizing a user identity corresponding to the palm print images.

The determination apparatus 40 for an artificial palm print generation model and the determination apparatus 50 for a palm print recognition model described above may be implemented by a computer device. The computer device includes a processor and a memory. The modules in the apparatus may be implemented by software modules stored in the memory, for example, may be implemented as computer-executable instructions. When the processor executes instructions stored in the memory, functions of the corresponding modules may be implemented.

The above technical solutions will be described in detail in the following embodiments.

Training systems for the artificial palm print generation models in the embodiments may also be implemented by deep learning models, such as GANs or diffusion models. FIG. 4 shows a schematic diagram of a training system 400 of an artificial palm print generation model according to an embodiment of this application. A training system 400 includes a generator and a discriminator. In scenarios where the training set is small-sample, the discriminator may exhibit overfitting. This may lead to unstable training and difficulties in convergence. To address the issue of discriminator overfitting, a dynamic, differentiable data augmentation module is integrated into the training system 400.

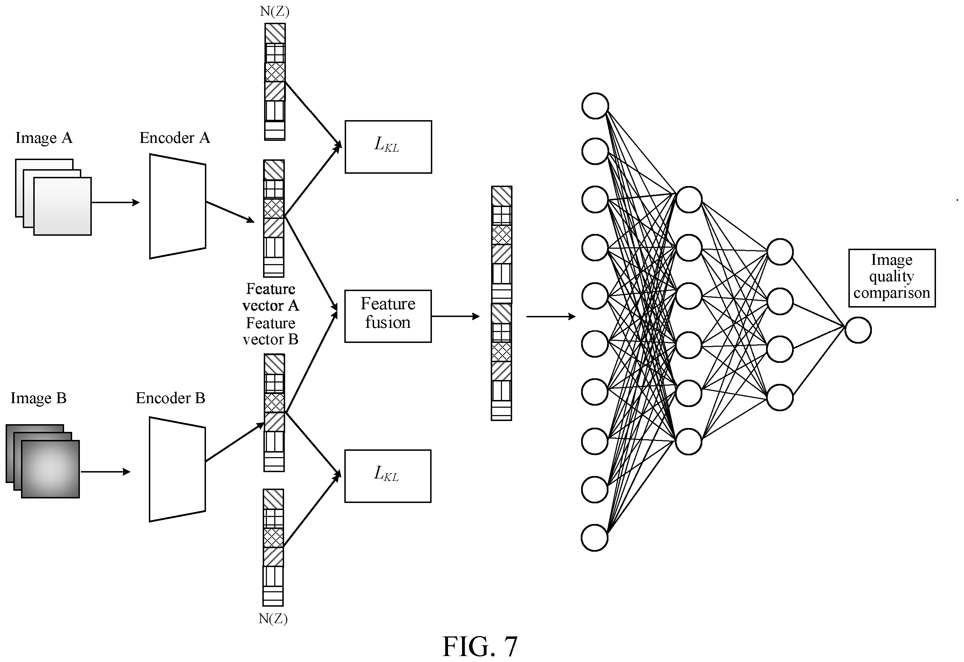

In the embodiments, the training system 400 may obtain a real palm print image 410, and perform data augmentation on the real palm print image 410 using a data augmentation module 420 to obtain an augmented real palm print curve. The augmented real palm print image is input to an encoder 430 to obtain a vectorized real data feature 440. The real data feature 440, a random noise feature 450, and a Bezier curve 460 used as an identity control curve are all input into the generator 470 to obtain an artificial palm print curve 480 for a unique user identity. Here, the identity control curve may be a Bezier curve, which is a parameterized palm print curve generated in advance for the unique user identity, indicative of the appearance of a palm print. The identity control curve is generated in advance based on palm print templates for the unique user identity. Each of the palm print templates includes a first number of first palm print sub-curves and a second number of second palm print sub-curves parameterized using the Bezier curves. For a detailed description of the palm print template, refer to FIG. 7. Similarly, the artificial palm print image is also input into a data augmentation module 490 to perform the above data augmentation, obtaining an augmented artificial palm print image.

In some embodiments, a deep learning model serving as the artificial palm print generation model (hereinafter collectively referred to as the artificial palm print generation model) may include the encoder 430 and the generator 470 from the above training system 400. In some embodiments, the artificial palm print generation model may include the data augmentation module 420, the encoder 430, and the generator 470 from the above training system 400. In some embodiments, the artificial palm print generation model may include the data augmentation module 420, the encoder 430, the generator 470, and the data augmentation module 490 from the above training system 400.

Parameters of the above artificial palm print generation model are iteratively updated to ensure that the augmented artificial palm print image is different from the augmented real palm print image and that a degree of similarity between the augmented artificial palm print image and the augmented real palm print image is greater than a similarity threshold. An artificial palm print generation model with updated parameters is determined as a trained artificial palm print generation model. The similarity threshold may be a numerical value set by a person skilled in the art based on an empirical value, and the numerical value is greater than 0.5 and less than 1. In another example, the similarity threshold may be a numerical value greater than 0.8 and less than 1. As understood by a person skilled in the art, the similarity threshold may be any other suitable value. The similarity threshold may be set such that the augmented artificial palm print images and the augmented real palm print images are different and have the maximum degree of similarity.

In some embodiments, the data augmentation may include performing at least one of geometric transformation, color transformation, and filtering transformation on the real/artificial palm print images to obtain the augmented real palm print images.

In some embodiments, the data augmentation is performed on the real palm print images of a user according to a predetermined augmentation probability to obtain the augmented real palm print images. The augmentation probability depends on a degree of overfitting between the augmented artificial palm print images and the augmented real palm print images.

Loss functions of the generator 470 and the discriminator 4100 are as follows:

$$\mathcal{L}_G = log(1 - D(\mathcal{T}(G(z))))$$

where G is the generator, D is the discriminator, $\mathcal{L}_G$ is the loss function of the generator G, $\mathcal{T}$ is transformation, and z is Gaussian noise.

$$\mathcal{L}_D = log(D(\mathcal{T}(A_{real}))) + log(1 - D(\mathcal{T}(G(z))))$$

where G is the generator, D is the discriminator, $\mathcal{L}_D$ is the loss function of the discriminator D, $\mathcal{T}$ is the transformation, and $A_{real}$ is a real image randomly selected with an inversion probability.

Here, $\mathcal{T}$ represents a random data augmentation involving graphical transformation. Geometric and color transformations are applied to randomly selected pictures. The geometric and color transformations include methods such as isotropic scattering, rotation, translation, changes in color brightness, and contrast adjustment.

In some embodiments, the data augmentation further includes filtering sample space in which the images are located. After performing a Fourier transform on the images, the intensity of different frequency signals is sampled to enhance specific frequency bands.

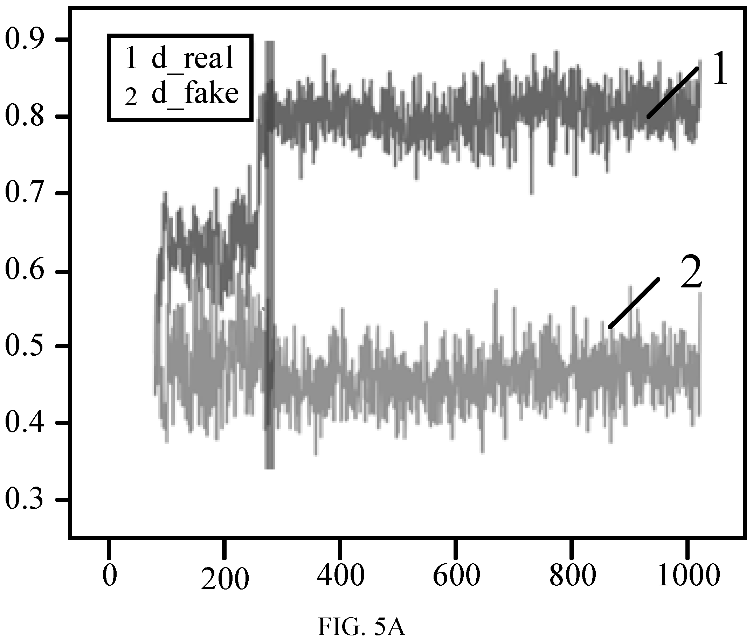

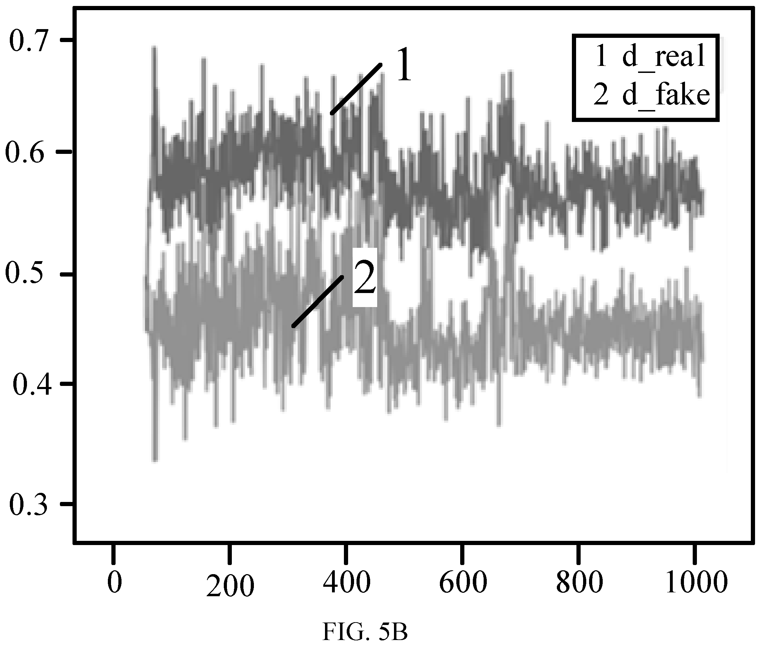

FIG. 5A and FIG. 5B show schematic diagrams of the effect of data augmentation in a scenario where a discriminator is overfitting. FIG. 5A employs a fixed data augmentation probability and FIG. 5B employs a dynamic data augmentation probability. A degree of discriminator overfitting varies significantly at different stages, and dynamic data augmentation may address this issue. In FIG. 5A and FIG. 5B, a vertical axis represents expected values of the discriminator for real images and artificial images, and a horizontal axis represents training epochs. The expected value of the real image is $\mathbb{E}(D(A_{real}))$, and the expected value of the artificial image is $\mathbb{E}(D(G(z)))$. When $\mathbb{E}(D(A_{real}))$ approaches 1 and $\mathbb{E}(D(G(z)))$ approaches 0, it indicates that the discriminator has experienced severe overfitting. The primary cause of overfitting is as follows. The discriminator memorizes most of real image samples, thereby failing to provide effective feedback to the generator. For this case, increasing the data augmentation probability will effectively alleviate the issue of discriminator overfitting. The degree of overfitting r may be expressed as follows:

$$r = |\mathbb{E}(D(G(z))) - \mathbb{E}(D(A_{real}))|,$$

where r is the degree of overfitting, $D$ is the discriminator, G is the generator, $z$ is the Gaussian noise, and $A_{real}$ is a real picture.

In some embodiments, the augmentation probability is determined based on the following operations. An initial value of the augmentation probability is set as an initial augmentation probability of the deep learning model. For example, the initial data augmentation probability is set to $p_1$ equal to 0.2. After each iteration, the augmentation probability is adjusted based on the degree of overfitting between the augmented artificial palm print images and the augmented real palm print images, and an adjusted augmentation probability is used as the augmentation probability for the next iteration. When the degree of overfitting $r$ exceeds a particular threshold, the probability of data augmentation is dynamically adjusted. Specifically, the dynamic adjustment is performed according to the following formula:

$$p_1 = min(max(|\mathbb{E}(G(z)) - \mathbb{E}(D)| * \alpha + p_1, p_{1\ lower\ bound}), p_{1\ upper\ bound})$$

where $p_1$ is the data augmentation probability, and the expected value $\mathbb{E}(G(z))$ of $G(z)$ and the expected value IE(D) of $D$ are range constrained. $p_{1\ lower\ bound}$ is the lower bound of the data augmentation probability, $p_{1\ upper\ bound}$ is the upper bound of the data augmentation probability, and $\alpha$ is the magnitude change $\Delta$ of a single expected value.

Due to characteristics of palm print pictures, an excessively high data augmentation probability may lead to color collapse in generated pictures, while an initially too low augmentation probability is unable to effectively address the overfitting issue. Therefore, interval constraints are imposed on data augmentation herein. In one embodiment, the augmentation probability is determined according to the following operations. The augmentation probability is determined based on the degree of overfitting between the augmented artificial palm print images from the previous iteration and the augmented real palm print images (i.e., data-augmented versions of the artificial palm print images generated by the artificial palm print generation model in the previous iteration and their corresponding real palm print images used as inputs). When the previous iteration is the first iteration, the augmentation probability is set to an initial value, and the augmentation probability is within a first interval range.

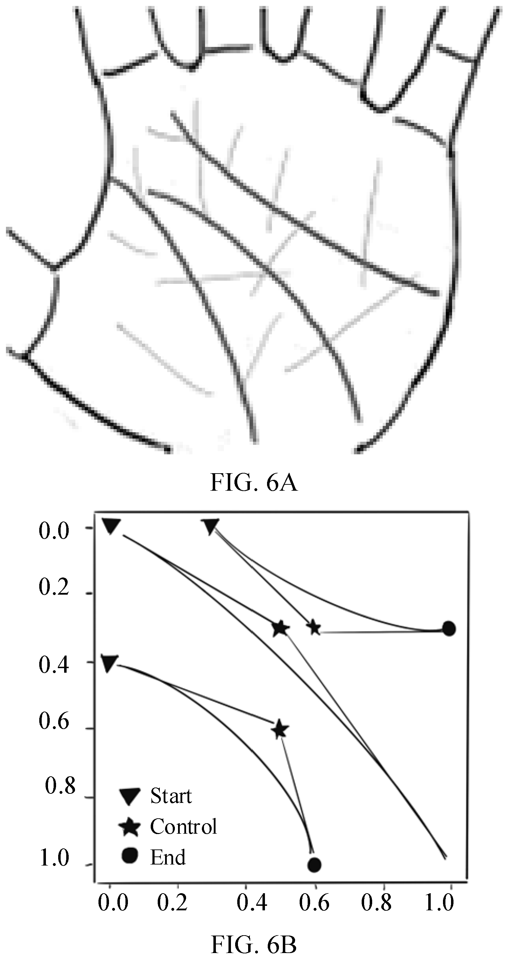

FIG. 6A and FIG. 6B show schematic diagrams of a palm print template. As shown in FIG. 6A, the palm print template may be composed of a first number of first palm print sub-curves and a second number of second palm print sub-curves. As shown in FIG. 6A, a palm print is essentially composed of a first number (e.g., 3 to 5) of principal lines and a second number of wrinkles. To fit the geometric appearance of the palm print, a Bezier function is used to parameterize the palm print. For simplicity, a second-order Bezier curve with three parameter points in a two-dimensional plane is used in FIG. 6B. Here, the three parameter points are: a start point marked by a triangle, a control point marked by a five-pointed star, and an end point marked by a circle. Here, the three principal lines of a left hand are taken as an example. In one example, the case of a right hand may be regarded as a mirror image of the left hand.

FIG. 7 shows a schematic diagram 700 of quality comparison of artificial palm print images according to an embodiment of this application. In deep learning models, the generator may effectively mitigate the issue of discriminator overfitting. When the degree of discriminator overfitting exceeds a predetermined threshold, a portion of the artificial palm print images may be dynamically incorporated (e.g., with probability p2) into the real images and integrated into a training process.

In the embodiments, after the parameters of the artificial palm print generation model have been iteratively updated to a predetermined number of iterations, images are selected from the artificial palm print images with an inversion probability p2. The artificial palm print images selected with the inversion probability p2 are merged into the training set for training the artificial palm print generation model.

In some embodiments, for the images selected with inversion probability p2 from the artificial palm print images output in a first iteration count (e.g., a plurality of iterations within an iteration round), a quality comparison is performed between the images in the artificial palm print images output in the first iteration count and different artificial palm print images output in a second iteration count, where the second iteration count is after the first iteration count, and the second iteration count is separated from the first iteration count by a predetermined number of iterations. In response to the quality of the images selected from the artificial palm print images output in the first iteration count being higher than that of the different artificial palm print images output in the second iteration count, the images selected from the artificial palm print images are added to the training set for training the artificial palm print generation model.

In some embodiments, for the images selected with inversion probability p2 from the artificial palm print images output in a first iteration count, the quality comparison between the images in the artificial palm print images output in the first iteration count and different artificial palm print images output in the second iteration count includes: acquiring a second training set, the second training set including a plurality of image pairs and corresponding quality comparison labels of the plurality of image pairs, the image pair including a first image and a second image, and the quality comparison label indicating a quality comparison result of the first image and the second image; encoding the first image and the second image, respectively, to obtain a first feature vector and a second feature vector; splicing the first feature vector and the second feature vector to obtain a spliced feature vector; inputting the spliced feature vector into a first neural network to obtain a predicted quality comparison result between the first image and the second image; iteratively updating parameters of the first neural network to minimize a difference between the predicted quality comparison result and the quality comparison result indicated by the quality comparison label; updating the parameters of the first neural network model; and determining the first neural network model with updated parameters as a trained first neural network model; and inputting the images in the artificial palm print image output in the first iteration count and the different artificial palm print images output in the second iteration count into the trained first neural network model to obtain a quality comparison result.

Here, a loss function may be expressed by the following formula:

$$\mathcal{L}_D = (1 - p_2)\, log(D(A_{real})) + p_2\, log(D(G(z))) + log(1 - D(G(z)))$$

where $\mathcal{L}_D$ is the loss function of the discriminator D, $A_{real}$ is a real image randomly selected with an inversion probability, and the inversion probability p2 is the probability of selecting artificial palm print images for incorporation into the training set.

An update probability of p2 may be defined as follows:

$$p_2 = \min\big(\max\big(\big|\mathbb{E}\big(G(z)\big) - \mathbb{E}(D)\big| * \alpha + p_2, p_{2\ lower\ bound}\big), p_{2\ upper\ bound}\big)$$

where $p_2$ is the inversion probability, and the expected value IE(G(z)) of $G(z)$ and the expected value IE(D) of D are range constrained. $p_{2\ lower\ bound}$ is the lower bound of the inversion probability, $p_{2\ upper\ bound}$ is the upper bound of the inversion probability, and $\alpha$ is the magnitude change $\Delta$ of a single expected value.

The probability interval will be used as a hyperparameter of the model. In one embodiment, after the parameters of the artificial palm print generation model have been iteratively updated to a predetermined number of iterations, images are selected from the artificial palm print images with an inversion probability. The artificial palm print images selected with the inversion probability are merged into the training set for training the artificial palm print generation model. The inversion probability is determined according to the following parameter: a degree of overfitting between an augmented artificial palm print image and an augmented real palm print image after iteration updates prior to the current iteration, and the inversion probability falls within a second interval range. In early stages of training, the quality of generated images is relatively poor, and introducing positive samples too early may lead to difficulties in model convergence and a decline in the quality of the generated images. In the early stages of training, the overfitting of the discriminator is not significant. Therefore, a restriction condition is proposed: An optimization method is only introduced into the model training after a specific round has been exceeded. This strategy helps to enhance the performance and stability of the GAN.

To further ensure the quality of images in a pseudo-positive sample dataset, this method designs an efficient image quality comparison module. The module may compare newly generated images with other images from the previous training epoch to ensure that only high-quality newly generated images are added to the pseudo-positive sample dataset. This method helps to improve the performance of the generator, thereby mitigating the issue of discriminator overfitting to some extent. The training set is derived from artificial palm print pictures generated during a training process of a generation model. In FIG. 7, it is assumed that within a particular range, the image quality in the GAN increases with the increase of the training epoch. By pairing later-stage artificial palm print images (generated in later training epochs) with earlier-stage artificial pictures (generated in earlier training epochs), a large number of image pairs with different quality may be constructed, thereby forming the image quality comparison module. It is worth noting that there needs to be a particular distance between the earlier training epochs and the later training epochs to produce an effective result; otherwise, the quality of the two would be quite similar.

Image A and image B, whose training epoch is later than that of image A, are passed through an encoder to extract real-image features, respectively. In one example, a dimension of an extracted feature vector is 16×16. The encoder may adopt a 4-layer convolution structure to effectively acquire features in the real palm print images. Next, an input multi-dimensional tensor is flattened into a one-dimensional tensor. A constraint $\mathcal{L}_{KL}$ is imposed on the feature vector so that the distribution $N(\mu_Q, \sigma_Q)$ of the feature vector follows a normal distribution, where $\mu_Q$ is a mean value and $\sigma_Q$ is a standard deviation. A loss function $\mathcal{L}_{KL}$ is as follows:

$$\mathcal{L}_{KL} = -\frac{1}{2}\left(1 - log\sigma_Q{}^2 - \sigma_Q{}^2 - \mu_Q{}^2\right).$$

By stitching the feature vectors of image A and image B and inputting them into a multi-layer neural network, a result generated by an activation function sigmoid is the final image quality comparison result.

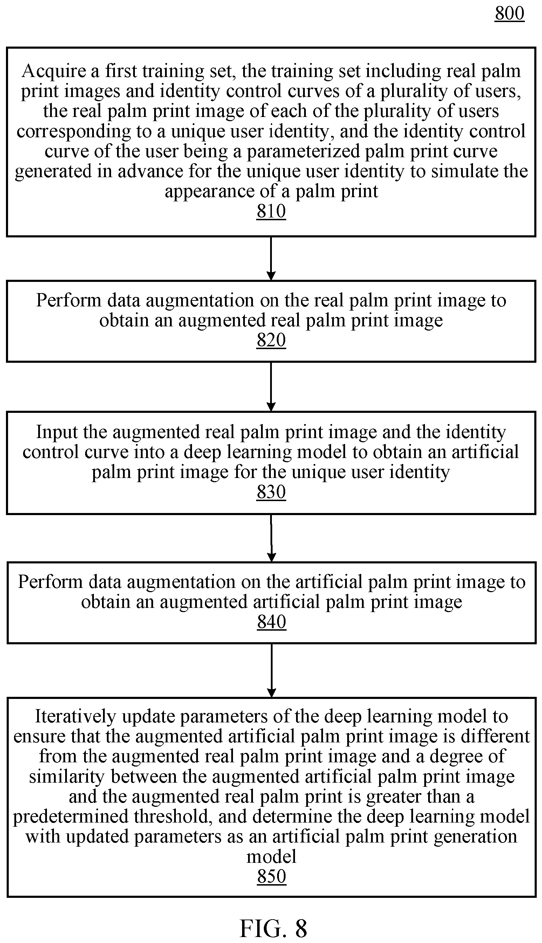

FIG. 8 is a flowchart of a method 800 for determining an artificial palm print generation model according to an embodiment of this application. The method 800 for determining the artificial palm print generation model is performed by a computer device. The method includes the following operations.

Operation 810: Acquire a training set, the training set including real palm print images and identity control curves of a plurality of users. As understood by a person skilled in the art, the real palm print image here is not a picture of the user's hand, but an image of a ROI of the hand extracted from the picture of the hand. The real palm print image of the user corresponds to a unique user identity, and the identity control curve of the user is a parameterized palm print curve which is generated in advance for the unique user identity and is indicative of the appearance of a palm print. In one embodiment, a control curve for a user identity is generated in advance for a unique user identity, and is indicative of the parameterized palm print curve of the appearance of the palm print. In one embodiment, each of palm print templates includes a first number of first palm print sub-curves and a second number of second palm print sub-curves parameterized using Bezier curves.

The palm print is essentially composed of a first number (e.g., 3 to 5) of principal lines and a second number of wrinkles. To fit the geometric appearance of the palm print, a Bezier function is used to parameterize the palm print. A second-order Bezier curve with three parameter points in a two-dimensional plane is used. Here, the three parameter points are: a start point marked by a triangle, a control point marked by a five-pointed star, and an end point marked by a circle. Here, the three principal lines of a left hand are taken as an example. In one example, the case of a right hand may be regarded as a mirror image of the left hand.

Operation 820: Perform data augmentation on the real palm print image to obtain an augmented real palm print image.

In one embodiment, at least one of geometric transformation, color transformation, and filtering transformation is performed on the real palm print images of the user to obtain augmented real palm print images. The geometric and color transformations include methods such as isotropic scattering, rotation, translation, changes in color brightness, and contrast adjustment.

In one embodiment, the data augmentation further includes filtering sample space in which the images are located. After performing a Fourier transform on the images, the intensity of different frequency signals is sampled to enhance specific frequency bands.

In another embodiment, the data augmentation is performed on the real palm print images of the user according to a predetermined augmentation probability to obtain augmented real palm print images. The augmentation probability depends on a degree of overfitting between augmented artificial palm print images and the augmented real palm print images. Additionally, the augmentation probability is determined based on the following operations. An initial value of the augmentation probability is set as an initial augmentation probability of the deep learning model. After each iteration, the augmentation probability is adjusted based on the degree of overfitting between the augmented artificial palm print images and the augmented real palm print images, and an adjusted augmentation probability is used as the augmentation probability for the next iteration.

For example, the initial data augmentation probability is set to $p_1$ equal to 0.2. After each iteration, the augmentation probability is adjusted based on the degree of overfitting between the augmented artificial palm print images and the augmented real palm print images, and an adjusted augmentation probability is used as the augmentation probability for the next iteration. When the degree of overfitting r exceeds a particular threshold, the probability of data augmentation is dynamically adjusted. Specifically, the dynamic adjustment is performed according to the following formula:

$$p_1 = min(max(|\mathbb{E}(G(z)) - \mathbb{E}(D)| * \alpha + p_1, p_{1\ lower\ bound}), p_{1\ upper\ bound})$$

where $p_1$ is the data augmentation probability, and the expected value $\mathbb{E}(G(z))$ of $G(z)$ and the expected value IE(D) of D are range constrained. $p_{1\ lower\ bound}$ is the lower bound of the data augmentation probability, $p_{1\ upper\ bound}$ is the upper bound of the data augmentation probability, and $\alpha$ is the magnitude change $\Delta$ of a single expected value.

Due to characteristics of palm print pictures, an excessively high data augmentation probability may lead to color collapse in generated pictures, while an initially too low augmentation probability is unable to effectively address the overfitting issue. Therefore, interval constraints are imposed on data augmentation herein.

Operation 830: Input the augmented real palm print image and the identity control curve into a deep learning model to obtain an artificial palm print image for the unique user identity.

Operation 840: Perform data augmentation on the artificial palm print image to obtain an augmented artificial palm print image. The data augmentation herein is the same as the data augmentation in operation 820. Specifically, the data augmentation may include at least one of geometric transformation, color transformation, and filtering transformation to obtain the augmented real palm print images. The geometric and color transformations include methods such as isotropic scattering, rotation, translation, changes in color brightness, and contrast adjustment. In one embodiment, the data augmentation further includes filtering sample space in which the images are located. After performing a Fourier transform on the images, the intensity of different frequency signals is sampled to enhance specific frequency bands.

Operation 850: Iteratively update parameters of the deep learning model to ensure that the augmented artificial palm print image is different from the augmented real palm print image and that a degree of similarity between the augmented artificial palm print image and the augmented real palm print image is greater than a similarity threshold, and determine the deep learning model with updated parameters as an artificial palm print generation model. The similarity threshold may be a numerical value set by a person skilled in the art based on an empirical value, and the numerical value is greater than 0.5 and less than 1. In another example, the similarity threshold may be a numerical value greater than 0.8 and less than 1. As understood by a person skilled in the art, the similarity threshold may be any other suitable value. The similarity threshold may be set such that the augmented artificial palm print images and the augmented real palm print images are different and have the maximum degree of similarity.

In a case where the above deep learning model is a GAN, the following loss function may be constructed to ensure that the augmented artificial palm print image is different from the augmented real palm print image and that the degree of similarity between the augmented artificial palm print image and the augmented real palm print image is greater than the similarity threshold:

Loss functions of a generator and a discriminator are as follows:

$$\mathcal{L}_G = log(1 - D(\mathcal{T}(G(z))))$$

where G is the generator, D is the discriminator, $\mathcal{L}_G$ is the loss function of the generator G, *T* is transformation, and z is Gaussian noise.

$$\mathcal{L}_D = log(D(\mathcal{T}(A_{real}))) + log(1 - D(\mathcal{T}(G(z))))$$

where G is the generator, D is the discriminator, $\mathcal{L}_D$ is the loss function of the discriminator D, $\mathcal{T}$ is the transformation, and $A_{real}$ is a real image randomly selected with an inversion probability.

In one embodiment, the method further includes: selecting, after the parameters of the artificial palm print generation model have been iteratively updated to a predetermined number of iterations, images from the artificial palm print images with an inversion probability; and merging the artificial palm print images selected with the inversion probability into the training set for training the artificial palm print generation model.

Specifically, the merging the artificial palm print images selected with the inversion probability into the training set for training the artificial palm print generation model includes: for the images selected with the inversion probability from the artificial palm print images output in a first iteration count, performing quality comparison between the images in the artificial palm print images output in the first iteration count and different artificial palm print images output in a second iteration count, the second iteration count being after the first iteration count, and the second iteration count being separated from the first iteration count by a predetermined number of iterations; and adding, in response to the quality of the images selected from the artificial palm print images output in the first iteration count being higher than that of the different artificial palm print images output in the second iteration count, the images selected from the artificial palm print images to the training set for training the artificial palm print generation model.

In one embodiment, the augmented real palm print images, the identity control curves, and the random Gaussian noise are input into the deep learning model to obtain the artificial palm print images for the unique user identity. By adding random Gaussian noise, the robustness of the deep learning model is augmented.

The method effectively enhances the training stability and palm print synthesis quality under small-sample scenarios by performing data augmentation on real palm prints and artificial palm prints, thereby improving the performance of the artificial palm print generation model. By generating palm print images with high accuracy and controllable user identities, the method provides a large amount of labeled data for deep learning model training, thereby meeting the demand for large-scale datasets in deep learning-based palm print recognition technology. This significantly enhances the performance of the model and reduces the dependence of palm print recognition tasks on real samples. Thus, the method solves the technical problem that, under limitations in the quantity and quality of publicly available palm print datasets, the artificial palm print generation model is prone to overfitting and instability in training processes. Furthermore, by combining an image quality comparison module with statistical data from the training process, the degree of overfitting of the model is effectively measured, and the training stability and image synthesis quality of the model under small-sample scenarios are effectively augmented through dynamic data augmentation and regularization methods.

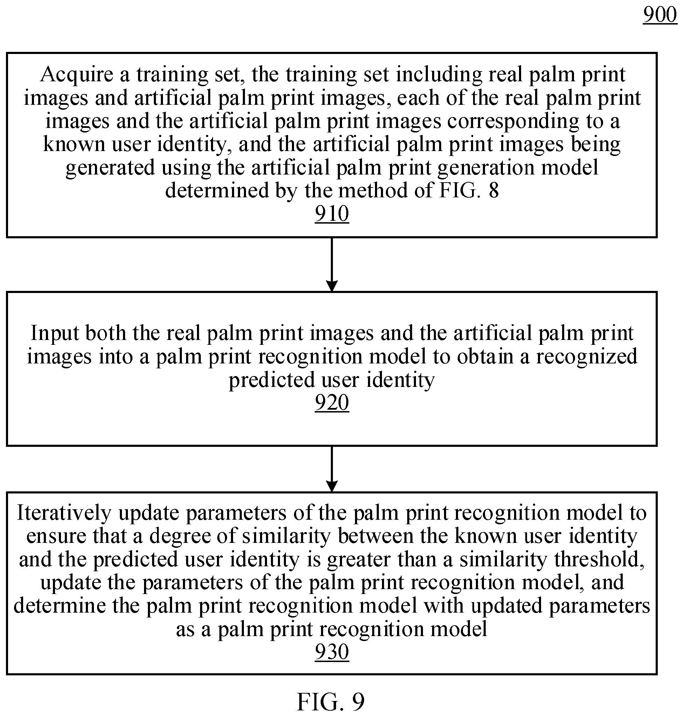

FIG. 9 shows a method 900 for determining a palm print recognition model according to an embodiment of this application. Operation 910: Acquire a training set, the training set including real palm print images and artificial palm print images, each of the real palm print images and the artificial palm print images corresponding to a known user identity, and the artificial palm print images being generated using the artificial palm print generation model shown in FIG. 8. The determination of the artificial palm print generation model is specifically described with reference to FIG. 8, and details will not be repeated here.

Operation 920: Input both the real palm print images and the artificial palm print images into the palm print recognition model to obtain a recognized predicted user identity.

Operation 930: Iteratively update parameters of the palm print recognition model to ensure that a degree of similarity between the known user identity and the predicted user identity is greater than a similarity threshold, update the parameters of the palm print recognition model, and determine the palm print recognition model with updated parameters as a palm print recognition model.

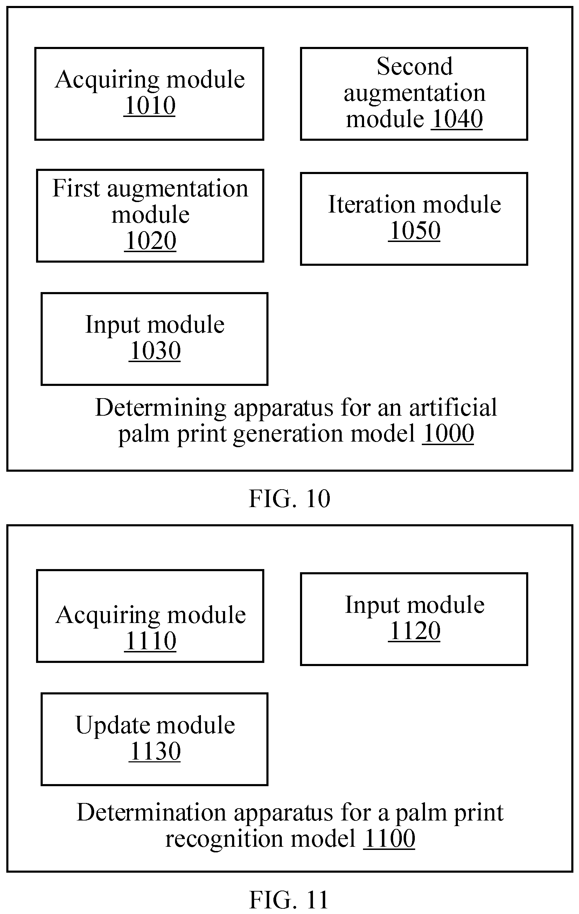

FIG. 10 schematically shows a schematic block diagram of a determination apparatus 1000 for an artificial palm print generation model. The determining apparatus 1000 for an artificial palm print generation model includes: an acquiring module 1010, configured to acquire a first training set, the training set including real palm print images and identity control curves of a plurality of users, the real palm print image of each of the plurality of users corresponding to a unique user identity, and the identity control curve of the user being a parameterized palm print curve which is generated in advance for the unique user identity and is indicative of the appearance of a palm print; a first augmentation module 1020, configured to perform data augmentation on the real palm print image to obtain an augmented real palm print image; an input module 1030, configured to input the augmented real palm print image and the identity control curve into a deep learning model to obtain an artificial palm print image for the unique user identity; a second augmentation module 1040, configured to perform data augmentation on the artificial palm print image to obtain an augmented artificial palm print image; and an iteration module 1050, configured to iteratively update parameters of the deep learning model to ensure that the augmented artificial palm print image is different from the augmented real palm print image and that a degree of similarity between the augmented artificial palm print image and the augmented real palm print image is greater than a similarity threshold, and determine the deep learning model with updated parameters as an artificial palm print generation model.

The determination apparatus 1000 for an artificial palm print generation model may be implemented in software, hardware, or a combination of software and hardware, and a plurality of different modules in the apparatus may be implemented in the same software or hardware structure, or a single module may be implemented by a plurality of different software or hardware structures.

Furthermore, the determination apparatus 1000 for an artificial palm print generation model may be configured to implement the method for determining an artificial palm print generation model described above. The related details have been described in detail above, and for the sake of brevity, they will not be repeated here. In addition, these apparatuses may have the same features and advantages as those described in the corresponding methods.

FIG. 11 schematically shows a schematic block diagram of a determination apparatus 1100 for a palm print recognition model. The determination apparatus 1100 for a palm print recognition model includes: an acquiring module 1110, configured to acquire a third training set, the training set including real palm print images and artificial palm print images, each of the real palm print images and the artificial palm print images corresponding to a known user identity, and the artificial palm print images being generated using the artificial palm print generation model shown in FIG. 10; an input module 1120, configured to input both the real palm print images and the artificial palm print images into the palm print recognition model to obtain a recognized predicted user identity; an update module 1130, configured to iteratively update parameters of the palm print recognition model to ensure that a degree of similarity between the known user identity and the predicted user identity is greater than a similarity threshold, update the parameters of the palm print recognition model, and determine the palm print recognition model with updated parameters as a palm print recognition model, enabling the palm print recognition model to be configured to recognize a user identity corresponding to the palm print images.

The determination apparatus 1100 for a palm print recognition model may be implemented in software, hardware, or a combination of software and hardware, and a plurality of different modules in the apparatus may be implemented in the same software or hardware structure, or a single module may be implemented by a plurality of different software or hardware structures.

Furthermore, the determination apparatus 1100 for a palm print recognition model may be configured to implement the method for determining a palm print recognition model described above. The related details have been described in detail above, and for the sake of brevity, they will not be repeated here. In addition, these apparatuses may have the same features and advantages as those described in the corresponding methods.

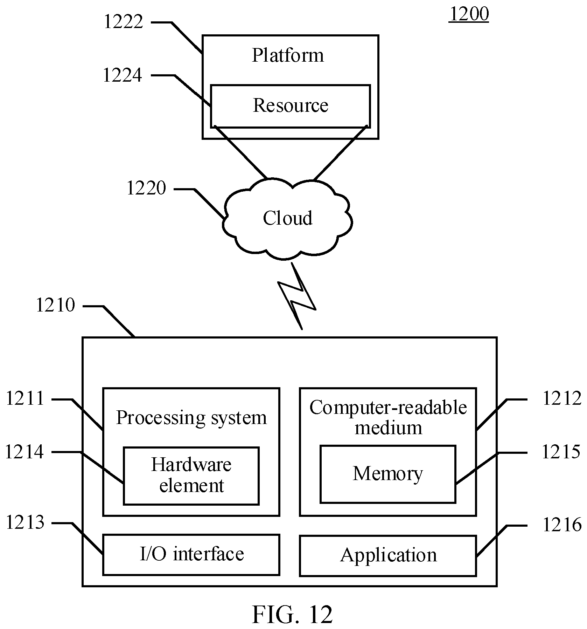

FIG. 12 illustrates an example system 1200, which includes an example computing device 1210 representing one or more systems and/or devices that may implement various methods described herein. The computing device 1210 may be, for example, a server of a service provider, a device associated with the server, a system-on-chip, and/or any other suitable computing device or computing system. The determination apparatus 1000 for an artificial palm print generation model and the determination apparatus 1100 for a palm print recognition model described above with reference to FIG. 10 and FIG. 11 may take the form of the computing device 1210. Alternatively, the determination apparatus 1000 for an artificial palm print generation model and the determination apparatus 1100 for a palm print recognition model described in FIG. 10 and FIG. 11 may be implemented as a computer program in the form of an application 1216.

The example computing device 1210 as illustrated includes a processing system 1211, one or more computer-readable media 1212, and one or more I/O interfaces 1213, all of which are communicatively coupled. Although not shown, the computing device 1210 may also include a system bus or other data and command transfer systems that couple various components to each other. The system bus may include any one or a combination of different bus structures, such as a memory bus or memory controller, a peripheral bus, a universal serial bus, and/or a processor or local bus using any of a variety of bus architectures. Various other examples are also contemplated, such as control and data lines.

The processing system 1211 represents functionality for performing one or more operations using hardware. Therefore, the processing system 1211 is illustrated as including hardware elements 1214 that may be configured as processors, functional blocks, etc. This may include hardware implemented as an application specific integrated circuit or other logic devices formed using one or more semiconductors. The hardware elements 1214 are not limited by materials from which they are formed or processing mechanisms employed therein. For example, the processor may include one or more semiconductors and/or transistors (e.g., an electronic integrated circuit (IC)). In such contexts, processor-executable instructions may be electronic executable instructions.

The computer readable medium 1212 is illustrated as including a memory/storage apparatus 1215. The memory/storage apparatus 1215 represents the memory/storage capacity associated with one or more computer-readable media. The memory/storage apparatus 1215 may include volatile media (such as a random-access memory (RAM)) and/or non-volatile media (such as a read-only memory (ROM), a flash memory, optical disks, and magnetic disks). The memory/storage apparatus 1215 may include fixed media (e.g., a RAM, a ROM, and a fixed hard disk drive) and removable media (e.g., a flash memory, a removable hard disk drive, and optical disks). The computer-readable medium 1212 may be configured in various other ways described further below.

The one or more I/O interfaces 1213 represent functionality that allows a user to input commands and information to the computing device 1210 using various input devices, and in some embodiments also allows information to be presented to the user and/or to other components or devices using various output devices. Examples of the input devices include a keyboard, a cursor control device (e.g., a mouse), a microphone (e.g., for voice input), a scanner, touch functionality (e.g., capacitive or other sensors configured to detect physical touch), a camera (e.g., capable of detecting touchless motion as gestures using visible or invisible wavelengths, such as infrared frequencies), and the like. Examples of the output devices include a display device, a speaker, a printer, a network interface card, a haptic response device, and the like. Therefore, the computing device 1210 may be configured in various ways, as described further below, to support user interaction.

The computing device 1210 also includes the application 1216. The application 1216 may be, for example, a software example of the determination apparatus 1000 for an artificial palm print generation model and the determination apparatus 1100 for a palm print recognition model described in FIG. 10 and FIG. 11, and may be implemented in combination with other elements in the computing device 1210 to realize the techniques described herein.

This application provides a computer program product or computer program, including computer instructions. The computer instructions are stored in a non-transitory computer-readable storage medium. A processor of the computing device reads the computer instructions from the computer-readable storage medium and executes the computer instructions, causing the computing device to perform a method for presenting visual data provided in the various exemplary implementations described above.

Various techniques may be described herein in a general context of software, hardware elements, or program modules. Generally, these modules include routines, programs, objects, elements, components, data structures, and the like, that perform specific tasks or implement specific abstract data types. The terms "module", "function", and "component" as used herein, generally represent software, firmware, hardware, or a combination thereof. Features of the techniques described herein are platform-independent, meaning that these techniques may be implemented on various computing platforms having various processors.

Implementations of the described modules and techniques may be stored on or transmitted across some form of computer-readable medium. The computer-readable medium may include a variety of media accessible by the computing device 1210. By way of example and not limitation, the computer-readable medium may include a "computer-readable storage medium" and a "computer-readable signal medium".

In contrast to mere signal transmission, carrier waves, or the signal itself, a "computer-readable storage medium" refers to a medium and/or device capable of persistently storing information, and/or a tangible storage device. Therefore, the computer-readable storage medium refers to a non-signal bearing medium. The computer-readable storage media include hardware such as volatile and non-volatile, removable and non-removable media, and/or storage devices implemented in any method or technology suitable for storing information (such as computer-readable instructions, data structures, program modules, logic elements/circuits, or other data). Examples of computer-readable storage media may include, but are not limited to, a RAM, a ROM, an electrically erasable programmable read-only memory (EEPROM), a flash memory, or other memory technologies, a compact disc read-only memory (CD-ROM), a digital versatile disk (DVD), or other optical storage devices, hard disks, cassette tapes, magnetic tapes, disk storage units, or other magnetic storage devices, or other storage devices, tangible media, or articles suitable for storing desired information and accessible by a computer.

The "computer-readable signal medium" refers to a signal-bearing medium configured to transmit instructions to hardware of the computing device 1210, such as via a network. The signal medium may typically embody the computer-readable instructions, data structures, program modules, or other data in modulated data signals such as carrier waves, data signals, or other transmission mechanisms. The signal medium also includes any information transmission medium. The term "modulated data signal" refers to a signal in which one or more characteristics are set or changed to encode information into the signal. By way of example and not limitation, communication media include wired media such as wired networks or direct-wired connections, and wireless media such as acoustic, radio frequency (RF), infrared, and other wireless media.

As previously described, the hardware elements 1214 and the computer-readable medium 1212 represent instructions, modules, programmable device logic, and/or fixed device logic implemented in a form of hardware, and in some embodiments may be configured to implement at least some aspects of the techniques described herein. The hardware elements may include components of integrated circuits or a system-on-chip, an application specific integrated circuit (ASIC), a field-programmable gate array (FPGA), a complex programmable logic device (CPLD), and other implementations in silicon or other hardware devices. In this context, the hardware elements may serve as processing devices to execute program tasks defined by instructions, modules, and/or logic embodied in the hardware elements, as well as hardware devices for storing instructions for execution, for example, a non-transitory computer-readable storage medium described previously.

The aforementioned combinations may also be used to implement the various techniques and modules described herein. Therefore, software, hardware, or program modules and other program modules may be implemented as one or more instructions and/or logic embodied in some form of computer-readable storage medium and/or by one or more hardware elements 1214. The computing device 1210 may be configured to implement specific instructions and/or functions corresponding to software and/or hardware modules. Thus, for example, by using the computer-readable storage media and/or hardware elements 1214 of the processing system, modules may be implemented at least partially in hardware as modules that may be executed by the computing device 1210 as software. The instructions and/or functions may be executable/operable by one or more articles (e.g., one or more computing devices 1210 and/or processing systems 1211) to implement the techniques, modules, and examples herein.

In various implementations, the computing device 1210 may employ a variety of different configurations. For example, the computing device 1210 may be implemented as a computer-type device, including a personal computer, a desktop computer, a multi-screen computer, a laptop computer, a netbook, and the like. The computing device 1210 may also be implemented as a mobile apparatus-type device, including mobile devices such as a mobile phone, a portable music player, a portable gaming device, a tablet computer, and a multi-screen computer. The computing device 1210 may also be implemented as a television-type device, including devices with or connected to a generally larger screen in a casual viewing environment. The devices include televisions, set-top boxes, gaming consoles, and the like.

The techniques described herein may be supported by these various configurations of the computing device 1210, and are not limited to specific examples of the techniques described herein. The functionality may also be fully or partially implemented in a "cloud" 1220 using a distributed system, such as through a platform 1222 as described below.

The cloud 1220 includes and/or represents the platform 1222 for resources 1224. The platform 1222 is based on the underlying functionality of the hardware (e.g., servers) and software resources of the cloud 1220. The resources 1224 may include applications and/or data that may be used when performing computer processing on servers remote from the computing device 1210. The resources 1224 may also include services provided through the Internet and/or through subscriber networks such as cellular or Wi-Fi networks.

The platform 1222 may abstract resources and functionalities to connect the computing device 1210 with other computing devices. The platform 1222 may also be configured to perform hierarchical abstraction of resources to provide a corresponding level of resources for demands encountered for the resources 1224 implemented via the platform 1222. Thus, in an embodiment of an interconnected device, implementations of the functionality described herein may be distributed throughout the system 1200. For example, the functionality may be partially implemented on the computing device 1210 and through the platform 1222 that abstracts the functionality of the cloud 1220.

The embodiments of this application have been described with reference to different functional units for clarity. However, it will be clear that the functionality of each functional unit may be implemented in a single unit, in multiple units, or as part of other functional units without departing from this application. For example, functionality illustrated as being performed by a single unit may be executed by a plurality of different units. Thus, references to specific functional units are merely references to appropriate units for providing the described functionality and do not imply a strict logical or physical structure or organization. Consequently, this application may be implemented in a single unit, or may be physically and functionally distributed across different units and circuits.

In the embodiments of this application, the term "module" or "unit" refers to a computer program or a part of a computer program with a predetermined function, which works together with other related parts to achieve a predetermined objective, and may be fully or partially implemented using software, hardware (such as a processing circuit or a memory), or a combination thereof. Similarly, a single processor (or a plurality of processors or memories) may be configured to implement one or more modules or units. Furthermore, the module or unit may be a part of an integrated module or unit that includes the functionality of the module or unit.

Although this application has been described with reference to some embodiments, it is not intended to be limited to specific forms set forth herein. Instead, the scope of this application is limited only by the appended claims. Additionally, although individual features may be included in different claims, these may possibly advantageously be combined, and inclusion in different claims does not imply that a combination of features is not feasible and/or advantageous. The order of the features in the claims does not imply that the features need to operate in any particular order. Furthermore, in the claims, the word "comprising" does not exclude other elements, and the term "a" or "an" does not exclude a plurality. Reference numerals in the claims are provided as explicit examples only and are not to be construed as limiting the scope of the claims in any way.

In the specific implementations of this application, there are references to entity-related data such as default information of entities. When the above embodiments of this application are applied to specific products or technologies, user permission or consent is to be obtained, and the collection, use, and processing of related data are to comply with relevant laws, regulations, and standards in relevant countries and regions.

Technical features of the foregoing embodiments may be combined in different manners to form other embodiments. To make the description concise, not all the possible combinations of the technical features in the foregoing embodiments are described. However, the combinations of these technical features are to be considered as falling with the scope of the description as long as there is no contradiction therein.

In summary, the scope of the claims is not intended to be limited to the implementations in the examples described above, and the specification as a whole is to be interpreted in the broadest manner.

**Claims**

1. A method for determining an artificial palm print generation model performed by a computer device, the method comprising:

   acquiring a first training set, the first training set comprising real palm print images and identity control curves of a plurality of users, the real palm print images each corresponding to a unique user identity of a respective user, the identity control curves each being a parameterized palm print curve indicative of appearance of the corresponding real palm print image;

   performing data augmentation on a first real palm print image of a first user in the first training set to obtain a data-augmented first real palm print image;

   obtaining a first artificial palm print image corresponding to the first user generated by applying a deep learning model to the data-augmented first real palm print image and a first identity control curve of the first user;

   adjusting parameters of the deep learning model when a data-augmented first artificial palm print image is identical to the data-augmented first real palm print image or when a degree of similarity between the data-augmented first artificial palm print image and the data-augmented first real palm print image is not greater than a preset similarity threshold; and

   determining the deep learning model to be the artificial palm print generation model when the data-augmented first artificial palm print image is different from the data-augmented first real palm print image and the degree of similarity between the data-augmented first artificial palm print image and the data-augmented first real palm print image is less than the similarity threshold.

2. The method according to claim 1, wherein the data augmentation comprises:
   at least one of geometric transformation, color transformation, and filtering transformation.

3. The method according to claim 1, wherein the data augmentation comprises:
   data augmentation based on an augmentation probability, wherein the augmentation probability is determined based on: a degree of overfitting between a data-augmented second real palm print image previously input to the deep learning model and a data-augmented second artificial palm print image previously output by the deep learning model.

4. The method of claim 3, wherein the augmentation probability is determined by:

   adjusting the augmentation probability by a preset amplitude value based on the degree of overfitting between the data-augmented second artificial palm print image and the data-augmented second real palm print image while ensuring that the adjusted augmentation probability falls within a preset first range,

   wherein when the augmentation probability is adjusted for the first time, a value of the augmentation probability is a preset initial value.

5. The method according to claim 1, further comprising:
   selecting, after a total number of adjustments to parameters of the deep learning model reaches a predetermined number, artificial palm print images based on an inversion probability from a plurality of artificial palm print images generated by the deep learning model and adding the selected artificial palm print images to the first training set for training the deep learning model, wherein the inversion probability is determined based on: a degree of overfitting between a data-augmented third real palm print image previously input to the deep learning model and a data-augmented third artificial palm print image previously output by the deep learning model, and the inversion probability falls within a second range.

6. The method according to claim 5, wherein adding the artificial palm print images selected based on the inversion probability from the plurality of artificial palm print images generated by the deep learning model to the first training set comprises:

   performing quality comparison between images in a first set of artificial palm print images and images in a second set of artificial palm print images output by the deep learning model, the second set of artificial palm print images being generated before the first set of artificial palm print images, and a predetermined number of artificial palm print images being generated by the deep learning model after the second set of artificial palm print images are generated and before the first set of artificial palm print images are generated; and

   adding, in response to the images in the first set of artificial palm print images having higher quality than the images in the second set of artificial palm print images, the images selected based on the inversion probability from the first set of artificial palm print images to the first training set for training the deep learning model.

7. The method according to claim 6, wherein performing the quality comparison between the images in the first set of artificial palm print images and the images in the second set of artificial palm print images output by the deep learning model comprises:

acquiring a second training set, the second training set comprising a plurality of image pairs and quality comparison labels of the plurality of image pairs, each image pair comprising a first image and a second image, and the quality comparison label indicating a quality comparison result of the first image and the second image;

extracting a first feature vector of the first image and a second feature vector of the second image;

splicing the first feature vector and the second feature vector to obtain a spliced feature vector;

inputting the spliced feature vector into a first neural network to obtain a predicted quality comparison result between the first image and the second image;

adjusting parameters of the first neural network model when a difference between the predicted quality comparison result and the quality comparison result indicated by the quality comparison label does not meet a preset minimization condition, or when distributions of the first feature vector and the second feature vector do not conform to a normal distribution;

determining the first neural network model to be a trained first neural network model when the difference between the predicted quality comparison result and the quality comparison result indicated by the quality comparison label meets the preset minimization condition and the distributions of the first feature vector and the second feature vector follow a normal distribution; and

splicing a feature vector of an image in the first set of artificial palm print images output by the deep learning model and a feature vector of an image in the second set of artificial palm print images, and inputting the spliced feature vector into the trained first neural network model to obtain a quality comparison result.

8. The method according to claim 1, wherein obtaining the first artificial palm print image corresponding to the first user generated by applying the deep learning model to the data-augmented first real palm print image and the first identity control curve of the first user comprises:

inputting a random Gaussian noise into the deep learning model to obtain the first artificial palm print image generated by modifying image features of the first real palm print image using the random Gaussian noise at the deep learning model.

9. The method according to any one of claims 1 to 8, wherein the identity control curves are parameterized palm print curves generated using palm print templates, each of which is indicative of the appearance of a palm print, and each palm print template comprises a first number of first palm print sub-curves and a second number of second palm print sub-curves parameterized using Bezier curves; and

wherein obtaining the first artificial palm print image corresponding to the first user generated by applying the deep learning model to the data-augmented first real palm print image and the first identity control curve of the first user comprises:

obtaining the first artificial palm print image generated by applying the deep learning model to a first number of first palm print sub-curves and a second number of second palm print sub-curves in the first identity control curve, palm print lines in the first artificial palm print image being in one-to-one correspondence with palm print sub-curves in the first palm print sub-curves and the second palm print sub-curves.

10. A method for determining a palm print recognition model, performed by a computer device, the method comprising:

acquiring a third training set, the third training set comprising a real palm print image and an artificial palm print image, each of the real palm print image and the artificial palm print image corresponding to a known user identity, and the artificial palm print image being generated by the artificial palm print generation model determined by the method according to any one of claims 1 to 9;

inputting the real palm print image and the artificial palm print image into the palm print recognition model to obtain a predicted user identity recognized by the palm print recognition model;

adjusting parameters of the palm print recognition model when a degree of similarity between the known user identity and the predicted user identity is not greater than a preset similarity threshold; and

providing the palm print recognition model for recognizing a user identity corresponding to a palm print image when the degree of similarity between the known user identity and the predicted user identity is greater than the similarity threshold.

11. A determination apparatus for an artificial palm print generation model, comprising:

an acquiring module, configured to acquire a first training set, the first training set comprising real palm print images and identity control curves of a plurality of users, a real palm print image of a user of the plurality of users corresponding to a unique user identity of the user, and the identity control curve of the user being a parameterized palm print curve indicative of appearance of the real palm print image;

an iteration module, configured to perform data augmentation on a first real palm print image of a first user in the first training set to obtain a data-augmented first real palm print image; obtain a first artificial palm print image corresponding to the first user generated by applying a deep learning model to the data-augmented first real palm print image and a first identity control curve of the first user; adjust parameters of the deep learning model when a data-augmented first artificial palm print image is identical to the data-augmented first real palm print image or when a degree of similarity between the data-augmented first artificial palm print image and the data-augmented first real palm print image is not greater than a preset similarity threshold; and determine the deep learning model as the artificial palm print generation model when the data-augmented first artificial palm print image is different from the data-augmented first real palm print image and the degree of similarity between the data-augmented first artificial palm print image and the data-augmented first real palm print image is smaller than the similarity threshold.

12. A determination apparatus for a palm print recognition model, comprising:

an acquiring module, configured to acquire a third training set, the third training set comprising a real palm print image and an artificial palm print image, each of the real palm print image and the artificial palm print image corresponding to a known user identity, and the artificial palm print image being generated by the artificial palm print generation model determined by the method according to any one of claims 1 to 9;

an update module, configured to input the real palm print image and the artificial palm print image into the palm print recognition model to obtain a predicted user identity recognized by the palm print recognition model; adjust parameters of the palm print recognition model when a degree of similarity between the known user identity and the predicted user identity is not greater than a preset similarity threshold; and provide the palm print recognition model for recognizing a user identity corresponding to the palm print images when the degree of similarity between the known user identity and the predicted user identity is greater than the similarity threshold.

13. A computing device, comprising:

a memory, configured to store computer-executable instructions; and

a processor, configured to implement the method according to any one of claims 1 to 10 when the computer-executable instructions are executed by the processor.

14. A computer-readable storage medium, having computer-executable instructions stored therein, the computer-executable instructions, when executed, implementing the method according to any one of claims 1 to 10.

15. A computer program product, comprising a computer program, the computer program, when executed, implementing operations of the method according to any one of claims 1 to 10.

FIG. 1

200

Capture hand
pictures of a user
using a terminal
payment device
210

↓

Extract
a ROI
220

↓

Gallery
registration
picture
260

Extract feature
vectors
240

↓

Calculate
a cosine
similarity
250

↓

Return a
calculation result
230

FIG. 2

Synthesis of
identity control
palm print curves
310

— Bezier curve → 

Artificial palm
print generation
model
320

Real palm print
image

Artificial palm
print image

→

Palm print
recognition
model
340

Latent variable
330

Random
Gaussian noise

300

FIG. 3A

30

Acquire a first training set, the first training set including real palm print images and identity control curves of a plurality of users
S31

Perform data augmentation on a first real palm print image of a first user in the first training set to obtain a data-augmented first real palm print image
S32

Obtain a first artificial palm print image corresponding to the first user, generated by a deep learning model using the data-augmented first real palm print image and a first identity control curve of the first user
S33

Adjust parameters of the deep learning model when a data-augmented first artificial palm print image and the data-augmented first real palm print image are identical or have a degree of similarity not greater than a preset similarity threshold
S34

Determine the deep learning model to be an artificial palm print generation model when the data-augmented first artificial palm print image and the data-augmented first real palm print image are different from each other and have a degree of similarity less than the similarity threshold
S35

FIG. 3B

Acquire a first training set, the first training set including real palm print images and identity control curves of a plurality of users
S31

Perform data augmentation on a first real palm print image of a first user in the first training set to obtain a data-augmented first real palm print image
S32

Obtain a first artificial palm print image corresponding to the first user, generated by a deep learning model using the data-augmented first real palm print image and a first identity control curve of the first user
S33

Adjust parameters of the deep learning model when a data-augmented first artificial palm print image and the data-augmented first real palm print image are identical or have a degree of similarity not greater than a preset similarity threshold
S34

Determine the deep learning model as an artificial palm print generation model when the data-augmented first artificial palm print image and the data-augmented first real palm print image are different from each other and have a degree of similarity less than the similarity threshold
S35

Has a number of adjustments to the parameters reached a predetermined number?
S36

No

Yes

Select artificial palm print images from a plurality of artificial palm print images generated by the deep learning model with an inversion probability and add the artificial palm print images to the first training set
S37

FIG. 3C

90

Acquire a third training set, the third training set including real palm print images and artificial palm print images
S91

Input the real palm print images and the artificial palm print images into a palm print recognition model to obtain a predicted user identity recognized by the palm print recognition model
S92

Adjust, when a degree of similarity between a known user identity and the predicted user identity is not greater than a preset similarity threshold, parameters of the palm print recognition model
S93

Provide, when the degree of similarity between the known user identity and the predicted user identity is greater than the similarity threshold, the palm print recognition model for recognizing a user identity corresponding to the palm print images
S94

FIG. 3D

Acquiring module 41

Iteration module 42

Determining apparatus for an artificial palm print generation model 40

FIG. 3E

Acquiring module 51

Iteration module 52

Determining apparatus for an artificial palm print generation model 50

FIG. 3F

EP 4 765 040 A1

Random noise feature 450

Real data
feature
440

| Real palm print data 410 | → | Data augmentation module 420 | → | Encoder 430 | → | | → | Generator 470 | → | Artificial palm print data 480 |

Bezier palm print 460

Data augmentation module 490

Discriminator 4100

Discriminator loss

FIG. 4

FIG. 5A

FIG. 5B

FIG. 6A

FIG. 6B

FIG. 7

800

Acquire a first training set, the training set including real palm print images and identity control curves of a plurality of users, the real palm print image of each of the plurality of users corresponding to a unique user identity, and the identity control curve of the user being a parameterized palm print curve generated in advance for the unique user identity to simulate the appearance of a palm print
810

Perform data augmentation on the real palm print image to obtain an augmented real palm print image
820

Input the augmented real palm print image and the identity control curve into a deep learning model to obtain an artificial palm print image for the unique user identity
830

Perform data augmentation on the artificial palm print image to obtain an augmented artificial palm print image
840

Iteratively update parameters of the deep learning model to ensure that the augmented artificial palm print image is different from the augmented real palm print image and a degree of similarity between the augmented artificial palm print image and the augmented real palm print is greater than a predetermined threshold, and determine the deep learning model with updated parameters as an artificial palm print generation model
850

FIG. 8

900

Acquire a training set, the training set including real palm print images and artificial palm print images, each of the real palm print images and the artificial palm print images corresponding to a known user identity, and the artificial palm print images being generated using the artificial palm print generation model determined by the method of FIG. 8
910

Input both the real palm print images and the artificial palm print images into a palm print recognition model to obtain a recognized predicted user identity
920

Iteratively update parameters of the palm print recognition model to ensure that a degree of similarity between the known user identity and the predicted user identity is greater than a similarity threshold, update the parameters of the palm print recognition model, and determine the palm print recognition model with updated parameters as a palm print recognition model
930

FIG. 9

Acquiring module
1010

Second
augmentation
module 1040

First augmentation
module
1020

Iteration module
1050

Input module
1030

Determining apparatus for an artificial
palm print generation model 1000

FIG. 10

Acquiring module
1110

Input module
1120

Update module
1130

Determination apparatus for a palm print
recognition model 1100

FIG. 11

FIG. 12

## INTERNATIONAL SEARCH REPORT

| | International application No. |
| --- | --- |
| | **PCT/CN2024/125978** |

| A. | CLASSIFICATION OF SUBJECT MATTER |
| --- | --- |

G06V 10/774(2022.01)i

According to International Patent Classification (IPC) or to both national classification and IPC

| B. | FIELDS SEARCHED |
| --- | --- |

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNTXT, ENTXT, ENTXTC, DWPI, WPABS, CNKI: 合成, 掌纹, 身份, 增强, 训练, artificial, palm print, ID, enhance, train

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 118608887 A (TENCENT TECHNOLOGY (SHENZHEN) CO., LTD.) 06 September 2024 (2024-09-06)<br>entire document | 1-15 |
| A | CN 116978071 A (TENCENT TECHNOLOGY (SHENZHEN) CO., LTD.) 31 October 2023 (2023-10-31)<br>entire document | 1-15 |
| A | CN 116168269 A (ALIPAY (HANGZHOU) INFORMATION TECHNOLOGY CO., LTD.) 26 May 2023 (2023-05-26)<br>entire document | 1-15 |
| A | KR 20210057845 A (EAZISLOGIC CO., LTD.) 24 May 2021 (2021-05-24)<br>entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 January 2025** | **15 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/125978**

| Patent document cited in search report | | | Publication date (day/month/year) | Patent family member(s) | Publication date (day/month/year) |
|---|---|---|---|---|---|
| CN | 118608887 | A | 06 September 2024 | None | |
| CN | 116978071 | A | 31 October 2023 | None | |
| CN | 116168269 | A | 26 May 2023 | None | |
| KR | 20210057845 | A | 24 May 2021 | None | |

Form PCT/ISA/210 (patent family annex) (July 2022)

**EP 4 765 040 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311582374